# EUROPEAN PATENT SPECIFICATION

(11) **EP 4 323 608 B1**
(45) Date of publication and mention of the grant of the patent: **09.09.2026**
(21) Application number: 22711980.7
(22) Date of filing: 10.03.2022
(51) Int. Cl.: B65G 21/18, B65G 47/57

(54) **MODULAR MANUFACTURING TOWER**
MODULARER PRODUKTIONSTURM
TOUR MODULAIRE DE FABRICATION

(30) Priority: 13.04.2021 EP 21168196
(43) Date of publication of application: 21.02.2024
(73) Proprietor: Hochschule für angewandte Wissenschaften Landshut, 84036 Landshut (DE)
(72) Inventor: SCHNEIDER, Markus, 84036 Landshut (DE); ETTENGRUBER, Tobias, 94436 Simbach (DE)
(74) Representative: Koplin, Moritz
(86) International application number: PCT/EP2022/056156
(87) International publication number: WO 2022/218617

(56) References cited:
- WO-A1-2013/155539
- DE-A1- 3 724 025
- DE-U1- 20 011 842
- US-A1- 2018 265 298

## Description

### Field

The present disclosure relates to a modular manufacturing tower. In particular, the present disclosure relates to a manufacturing tower with a first platform, a second platform and a conveyor, wherein the second platform is arranged above the first platform and the conveyor is configured to transport items vertically between the platforms.

### Background

Product manufacturing such as product assembly may involve a multitude of consecutive steps in which elements are consecutively added to the product. Provisioning said elements may involve storage and retrieval which is also commonly referred to as warehousing. To cope with a large number of elements, warehousing may be automated.

WO 2013/155539 A1 describes a gravity conveyor designed as a ferroconcrete multi-loop spiral belt which is mounted around the external perimeter of a multistoried industrial building.

DE 37 24 025 A1 shows a storage tower with a ring-shaped structure that (encloses the tower and) can be displaced vertically by a drive mechanism.

### Summary

The present disclosure provides a modular manufacturing tower and a manufacturing cell comprising said modular manufacturing tower.

The modular manufacturing tower comprises a first platform, a second platform and a conveyor. The second platform is arranged above the first platform and the conveyor is configured to transport items vertically between the platforms. The conveyor is further configured to transport items circumferentially along a perimeter of the manufacturing tower.

The term "manufacturing tower", as used throughout the description and the claims, particularly refers to an elongate structure which confines a space in which steps for manufacturing a product such as testing, milling, painting, drying, etc. but also storage, retrieval, and assembly may be undertaken (or to an elongate structure which is intended and/or configured to be used for manufacturing a product). In this regard, the term "modular", as used throughout the description and the claims, particularly refers to a manufacturing tower which is comprised of individual segments that are arranged above one another. The individual segments may have a cylindrical shape. The individual segments may differ in height and/or size or may be substantially equal in height and/or size. The individual segments may match (in level and height) to floors of a building in which the manufacturing tower is erected. The individual segments may be formed by modules comprising matching bottom and top connectors. If said modules comprise matching bottom and top connectors, the order of modules/segments can be freely varied.

The manufacturing tower may comprise a bottom module which only comprises top connectors and a top module which only comprises bottom connectors. The bottom module may be anchored to the floor of the building in which the manufacturing tower has been erected. The top module may be connected to a top floor or roof of the building. The manufacturing tower may comprise one or more power and/or supply lines which extend vertically through the manufacturing tower. For example, the one or more power and/or supply lines may extend from the bottom module vertically upwards or from the top module vertically downwards. The one or more supply lines may supply compressed air.

The term "platform", as used throughout the description and the claims, particularly refers to a flat structure on which machines and/or persons may stand. The platform may be made of metal. The platform may have a substantially constant thickness. The platform may comprise openings and/or adapters for mounting a machine (such as a robot) onto the platform. The platform may also comprise one or more channels for one or more power and/or supply lines. The platform may further comprise multiple interconnected segments. The platform may also have a structured surface for improved grip to facilitate the work of service personnel.

The term "conveyor", as used throughout the description and the claims, particularly refers to an apparatus which comprises a carriage on, in or by which items may be transported. The carriage may have a structured surface which may prevent an item (which has been placed on the carriage) or a container in which an item is stored from sliding or falling off the carriage (e.g., when the carriage is accelerated). For example, the carriage may comprise a recess and a part of the item or the container may extend into the recess so as to cause the item or the container to engage with the carriage. For instance, a robot may place the item or the container on the carriage and the surfaces of the item or the container and the carriage may be such that the item or the container and the carriage interlock.

The carriage may also comprise a device for actively loading an item or a container onto or into the carriage and/or for unloading the item or the container from the carriage. For example, the carriage may comprise a kinematic chain with an end effector which is configured to pick the item or the container up and to move the item or the container from one place to another. The carriage may also comprise a compartment. Loading the item or the container into the compartment may be effectuated by a mechanism which causes the item or the container to slide (e.g., along a slope) into the compartment when the carriage is in a loading position. For instance, the carriage may actuate a release mechanism when being moved in the loading position, which allows the item or the container to slide into the carriage (e.g., caused by gravitational force). In the unloading position, the carriage or an element within the compartment may be rotated or displaced such that the item or the container slides out (or is pushed out) of the compartment.

The formulation "vertically between the platforms", as used throughout the description and the claims, particularly refers to a vertical movement that starts at the level of one of the platforms and ends at the level of another one of the platforms. The vertical distance between the levels may equal a distance between the platforms. That is, the vertical distance between a start position and a stop position of the vertical movement may be equal to the distance between the platforms. The formulation "circumferentially along a perimeter of the manufacturing tower", as used throughout the description and the claims, particularly refers to a movement in a horizontal plane along a curve that follows a contour of the manufacturing tower. However, the items may also be transported along a path that involves a combined circumferential and vertical movement. For example, the start and stop positions may be at opposing sides of the manufacturing tower and at different levels and the items may be transported along an inclined path.

This may allow for more flexibility in the design of the manufacturing tower interior as items can be picked up at and delivered to different sides of the manufacturing tower. This may also help increasing productivity as the availability of alternative routes may decrease downtime. Stacking the platforms may further reduce the horizontal dimensions of the area required for manufacturing as stacking the platforms allows for making better use of the available space.

The conveyor comprises a structure extending circumferentially along the perimeter of the manufacturing tower. The structure is vertically movable to transport items vertically between the platforms. The modular manufacturing tower further comprises a first robot mounted on the first platform and/or a second robot mounted on the second platform.

The term "structure", as used throughout the description and the claims, particularly refers to a self-supporting structure, e.g., a structure made of metal or metal parts. There may be a substantially constant (horizontal) gap between the inner surface of the structure (i.e., the surface of the structure facing towards a platform) and the perimeter of a platform. The structure may be guided by rails extending vertically along the perimeter of the manufacturing tower. The rails may be integrated into or attached to columns lending structural support to the manufacturing tower.

The conveyor may further comprise a carrier which is movable relative to the structure.

The carrier may be guided by or run on one or more rails extending horizontally along the perimeter of the manufacturing tower. The carrier may also be a conveyor belt. For example, the conveyor may comprise a belt which is slung around rollers that are rotatably mounted to the structure.

This may allow moving the carrier or an item or a container containing the item to any position along the perimeter of the tower. For example, there may be a multitude of different positions at which items may be retrieved from or delivered to the interior of the manufacturing tower. The shell of the manufacturing tower may have an opening at each position at which items can be retrieved from or delivered to the interior of the tower.

The shell of the manufacturing tower may have only a few openings that allow for items being retrieved from or delivered to the interior of the manufacturing tower to separate and protect the exterior of the manufacturing tower from a dangerous process being carried-out within the manufacturing tower. The shell of the manufacturing tower may also have many and/or large openings to facilitate the retrieval of items from and the delivery of items to the interior of the manufacturing tower. For example, the shell of a vertical manufacturing tower segment may be divided into four subsegments and two of those subsegments (e.g., subsegments at opposite sides) may be spared to facilitate the retrieval of items from and the delivery of items to the interior of the manufacturing tower.

The carrier may be movable along a closed path around the perimeter of the manufacturing tower.

The structure may be a ring-shaped structure.

**In** this regard, the term "ring-shaped", as used throughout the description and the claims, particularly refers to a structure with a substantially constant height and width, that extends along the perimeter of the manufacturing tower.

The platforms may have an elliptical or circular shape.

The shape of the structure may be adapted to the shape of the platforms. For example, the structure may be an elliptical or a circular structure.

The modular manufacturing tower may further comprise a third platform. The third platform may be arranged above the second platform.

There may be a first vertical manufacturing tower segment between the first platform and the second platform and a second vertical manufacturing tower segment between the second platform and the third platform. Both vertical segments may be equal in shape and height and/or size.

The manufacturing tower may comprise a first at least partially automated manufacturing cell between the first platform and the second platform, and a second at least partially automated manufacturing cell between the second platform and the third platform.

Each of the at least partially automated manufacturing cells may comprise one or more robots. The robots may be configured to retrieve one or more items, or a container in which one or more items are stored from the conveyor and/or to deliver one or more items or a container in which one or more items are stored to the conveyor (depending on where the one or more items are needed).

The modular manufacturing tower may further comprise a first column, the first column connecting the first platform and the second platform and supporting the second platform.

For example, the first column may extend vertically along the perimeter of the manufacturing tower from the first platform to the second platform.

The modular manufacturing tower may further comprise a second column and a third column, the second column and the third column connecting the first platform and the second platform and supporting to the second platform.

The second column and the third column may extend vertically along the perimeter of the tower from the first platform to the second platform. The first column and the second column and the second column and the third column may be equidistantly spaced apart. For example, the first column, the second column and the third column may be placed at corners of a triangle, when seen in the vertical direction.

The structure may be slidably attached to the first column.

For example, the column may serve as (or comprise) a guide rail for the structure which extends circumferentially along a perimeter of the tower.

The first column may comprise vertically stacked segments of substantially equal length.

For example, the length of a segment may correspond to a vertical distance between two segments.

The manufacturing cell according to the invention comprises a modular manufacturing tower according to one of the embodiments described above, a first workstation, a second workstation and a third workstation. The workstations may be arranged around the manufacturing tower.

The manufacturing cell may further comprise a robot. The robot may be placed inside the manufacturing tower.

The robot may be configured to supply first items to the first workstation, second items to the second workstation and third items to the third workstation.

The robot may supply first items to the first workstation, second items to the second workstation and third items to the third workstation via the conveyor. As described above, the conveyor may comprise a kinematic chain which may directly or indirectly interact with the robot. For instance, the robot may position an item or a container containing the item at a place where it is picked up by the kinematic chain or the kinematic chain may receive the item or the container containing the item directly from the robot.

The manufacturing tower may further comprise a first store. The robot and the first store may form an automated warehouse which is integrated into the manufacturing cell. In particular, the first store and the workstations may comprise a shared frame making the manufacturing cell an integrated unit. The robot may also primarily or exclusively serve the workstations of the manufacturing cell by supplying said items. Notably, supplying the items may also include picking or collecting items from a periphery of the manufacturing cell (e.g., via the conveyor). However, even if the robot is movable, an area within which the robot (particularly the robot's base and/or the robot's center of mass) operates may be limited to a space within (or physically occupied by) the manufacturing cell, i.e., a space within an area surrounded by the workstations.

The term "workstation", as used throughout the description, particularly refers to a place where work is to be performed. A workstation may be provided with tools that are required to perform the work. Furthermore, a workstation may comprise a desk and/or a seat for a human operator (e.g., a worker). In this regard, the formulation "partially automated", as used throughout the description, particularly refers to the involvement of manual labor (for example, work performed by human operators).

Moreover, the term "manufacturing cell", as used throughout the description and the claims, particularly refers to a setting in which product parts or unfinished products are passed from one workstation to another, wherein different steps are performed on a product part or an unfinished product at the different workstations. As the steps may depend on each other, an order may be given in which product parts or unfinished products are passed from one workstation to the other. However, it may also be that the same step is performed at some or all of the workstations of a manufacturing cell and that the product parts or unfinished products are routed through only one or not all of the workstations of the manufacturing cell.

Furthermore, the term "robot", as used throughout the description and the claims, particularly refers to an assembly of serially connected links and joints that form an open kinematic chain. The robot may comprise a base, a shoulder, an arm and an end effector (e.g., a gripper) for retrieving or delivering items. Moreover, the robot may unload incoming items from the conveyor or another robot or vehicle, store and retrieve the items, and as the case may be, assist in the manufacturing. For example, instead of simply supplying an item, the robot may mount the item to an assembly which has been prepared or which is then worked on by a human operator. Moreover, the robot may cooperate with a human operator during a manufacturing step. This may also involve a scenario in which both, the robot and the human operator are in physical contact with the item at the same time. In addition, the robot may be provided with several independently operable kinematic chains and/or the manufacturing cell may be provided with multiple robots. The robots may communicate with each other to decide which task is performed by which robot. For example, a first robot may unload incoming items from the conveyor, another robot or a vehicle, while a second robot supplies the workstations with items.

Moreover, the term "items", as used throughout the description and the claims, particularly refers to assembly parts which are part of the final product. However, it may also refer to tools/objects which are used in the production process but do not form part of the final product. Furthermore, the formulation "arranged around", as used throughout the description and the claims, particularly refers to a setting in which the workstations are arranged along a (substantially) closed curve with a convex outer side which (substantially) encircles the robot and which limits the range of movement of a base of said robot, especially if the robot is movable. Notably, other machines than a robot may be used to establish an automated warehouse.

Having the workstations arranged around an automated warehouse reduces the distance between the warehouse and the workstations. Moreover, items may be supplied to the warehouse through the modular manufacturing tower, thereby avoiding the necessity of access to the robot at the level of the workstations.

The first workstation may comprise a first rack for a plurality of first storage bins and the robot may be configured to supply the first storage bins containing the first items to the first rack or to supply the first items to the first storage bins in the first rack.

In this regard, the term "rack", as used throughout the description and the claims, particularly refers to a structure in which a multitude of storage bins can be placed. The "rack" may comprise one or more inclined shelves (which may be provided with rollers for friction reduction) to direct storage bins (closer) to an operator of a workstation to which the rack is assigned. Furthermore, the term "storage bin", as used throughout the description and the claims, particularly refers to a container in which items can be placed and stored.

Said robot may be configured to access said first rack from a backside of said first rack and said first rack may be accessible to an operator of the first workstation from a frontside of said first rack.

In this regard, the term "frontside", as used throughout the description, particularly refers to a side which the operator faces when working at the workstation. Furthermore, the term "backside", as used throughout the description, particularly refers to a side which faces away from the operator, when the operator works at the workstation. Depending on the design of the manufacturing cell, the backside may be facing a center of the manufacturing cell. For example, if the manufacturing cell has a circular shape, the backside may face the center of the circle.

By loading the rack from the backside, interference between the robot and the operator can be prevented.

The first workstation may comprise a first work desk and the first rack may extend above said first work desk.

This may increase accessibility for both, the operator, and the robot.

The robot may be configured to withdraw the first items from the first store. The first store may be arranged below the first work desk and/or above the first rack.

In this regard, the terms "above/below", as used throughout the description and the claims, refer to a vertical range in which an object is placed but shall not be construed as implying that objects which are placed above or below each other do fully (or even partially) overlap when seen in a vertical direction, although such scenarios are contemplated. Moreover, there may be a vertical space between objects which are placed above or below each other, although scenarios where there is no (or substantially no) vertical space between objects which are placed above or below each other is also contemplated.

For example, the robot may be arranged on the second platform and the first store may be arranged on the first or third platform. Or the robot may be arranged on the first platform and the first store may be arranged on the second platform. Or the robot may be arranged on the third platform and the first store may be arranged on the first or second platform.

The first workstation and the second workstation may be arranged side-by-side.

In this regard, the term "side-by-side", as used throughout the description, particularly refers to a setting in which a first edge of the first workstation abuts a second edge of the second workstation. For example, desks of different workstations may abut on each other. In another example, tabletops of two or more workstations may be integrally formed.

This may facilitate passing the product parts or unfinished products between the first and the second workstation.

The first workstation and the third workstation may be arranged at opposite sides of the robot.

Accordingly, if the robot is able to turn around its vertical axis, the first workstation and the third workstation may be accessed by the robot without a need for linearly moving the robot, and in particular the robot's base. For example, the robot may comprise a link which is connected to the base by a rotary joint that allows for a rotation of the link around a vertical axis. The base may be mounted on the first, second, or third platform.

The manufacturing cell may further comprise a fourth workstation. The robot may be configured to supply fourth items to the fourth workstation. The first workstation may be arranged above the fourth workstation, or the fourth workstation may be arranged above the first workstation. For example, the first workstation may be at the level of the vertical tower segment between the first and the second platform, and the fourth workstation may be at the level of the vertical tower segment between the second and the third platform. The first workstation may also be at the level of the vertical tower segment between the second and the third platform, and the fourth workstation may be at the level of the vertical tower segment between the first and the second platform.

The robot may have a base which is stationary, or horizontally or vertically immovable.

The robot may also have a base which is horizontally movable, wherein the range of movability of said base is limited by a line connecting the workstations arranged around the robot.

A first distance between the first workstation and the base may be substantially equal to a second distance between the second workstation and the base.

The workstations and one or more further workstations of the cell may form a ring around the robot.

In this regard, the term "ring", as used throughout the description and the claims, particularly refers to a shape with an outer edge and an inner edge that can be described by closed curves. The curves may (but do not have to) be symmetric to a central axis (i.e., concentric).

The robot may be configured to be supplied with said items through the conveyor and to store the items within said ring before supplying the items to the workstations.

An additional horizontal conveyor may transport items or storage bins to the perimeter of the manufacturing tower (or beyond) for the items or storage bins be picked up by a robot within the manufacturing tower and/or vice versa. Moreover, although the horizontal conveyor may extend substantially in a horizontal direction, the horizontal conveyor may be inclined (for example, by less than 30°, preferably by less than 15°) for the items or storage bins to slide (e.g., over transport rollers) along the horizontal direction (from the periphery to the inner edge and/or from the inner edge to the periphery).

Establishing a local warehouse may allow decoupling the manufacturing cell from a central warehouse. Notably, the decoupling does not necessarily mean that there is no transport of items between the manufacturing cell and the central warehouse but rather that the local warehouse may serve as a buffer which reduces the interdependence (and the required degree of synchronization) between the warehouses.

Two manufacturing cells may be arranged side-by-side and form a figure of eight.

Accordingly, the cell edges may abut on each other, which may facilitate passing product parts or unfinished products between the cells. In addition, it may allow for a more compact placement. In particular, the manufacturing cells may be shaped as a pentagon, hexagon, heptagon, octagon, etc. and may be arranged to have two (or more) parallel edges.

A method of supplying items to workstations of a manufacturing cell, arranged around an automated warehouse, may comprise storing said items in said warehouse, detecting that a workstation requires one or more of said stored items and supplying the required one or more items to the workstation.

The workstations may be arranged along a substantially closed curve with a convex outer side.

Notably, all features of the manufacturing cell may be features of the method and vice versa.

### Brief Description of Drawings

The foregoing aspects and many of the attendant advantages will become more readily appreciated as the same become better understood by reference to the following description of embodiments, when taken in conjunction with the accompanying drawings, wherein like reference numerals refer to like parts throughout the various views, unless otherwise specified.
Fig. 1 shows a schematic side view and a schematic cross-sectional view of a modular manufacturing tower according to a first example, not forming part of the present invention as claimed.
Fig. 2 shows a schematic side view and a schematic cross-sectional view of a modular manufacturing tower according to a second example, not forming part of the present invention as claimed.
Fig. 3a to Fig. 7b schematically illustrate the transportation of items by a modular manufacturing tower according to a third example.
Fig. 8a and Fig. 8b schematically illustrate possible modifications of a modular manufacturing tower with regard to loading/unloading items to/from the carrier.
Fig. 9 illustrates a possible modification of the modular manufacturing towers of Fig. 1 to Fig. 8.
Fig. 10 illustrates another possible modification of the modular manufacturing towers of Fig. 1 to Fig. 8.
Fig. 11 illustrates a possible modification of the modular manufacturing towers of Fig. 1 to Fig. 10.
Fig. 12 illustrates a possible modification of the modular manufacturing towers of Fig. 1 to Fig. 11.
Fig. 13 illustrates a possible modification of the modular manufacturing towers of Fig. 1 to Fig. 12.
Fig. 14 illustrates another possible modification of the modular manufacturing towers of Fig. 1 to Fig. 12.
Fig. 15 illustrates a possible modification of the modular manufacturing towers of Fig. 13 and Fig. 14.
Fig. 16 illustrates a possible modification of the modular manufacturing towers of Fig. 1 to Fig. 15.
Fig. 17 illustrates another possible modification of the modular manufacturing towers of Fig. 1 to Fig. 15.
Fig. 18 illustrates an example for the integration of the modular manufacturing towers of Fig. 1 to Fig. 15 into a building.
Fig. 19 illustrates an example for the integration of the modular manufacturing tower of Fig. 1 to Fig. 18 into a manufacturing cell within a building.
Fig. 20 illustrates a possible modification of the modular manufacturing towers of Fig. 1 to Fig. 18 and a possible modification of the manufacturing cell of Fig. 19.
Fig. 21 illustrates a possible modification of the modular manufacturing towers of Fig. 1 to Fig. 18 and a possible modification of the manufacturing cell of Fig. 19.
Fig. 22 illustrates a possible modification of the modular manufacturing towers of Fig. 1 to Fig. 18 and a possible modification of the manufacturing cell of Fig. 19.
Fig. 23 shows a schematic front view of a workstation according to an example.
Fig. 24 illustrates a possible modification of the workstation of Fig. 23.
Fig. 25 schematically illustrates an example for supplying a modular manufacturing tower with items.
Fig. 26 schematically illustrates another example for supplying a modular manufacturing tower with items.
Fig. 27 shows a perspective view and a cross-sectional view of a manufacturing cell comprising a modular manufacturing tower.
Fig. 28 shows a flowchart of a method of supplying items to a workstation.

Notably, the drawings are not drawn to scale and unless otherwise indicated, they are merely intended to conceptually illustrate the structures and procedures described herein. Description of Embodiments

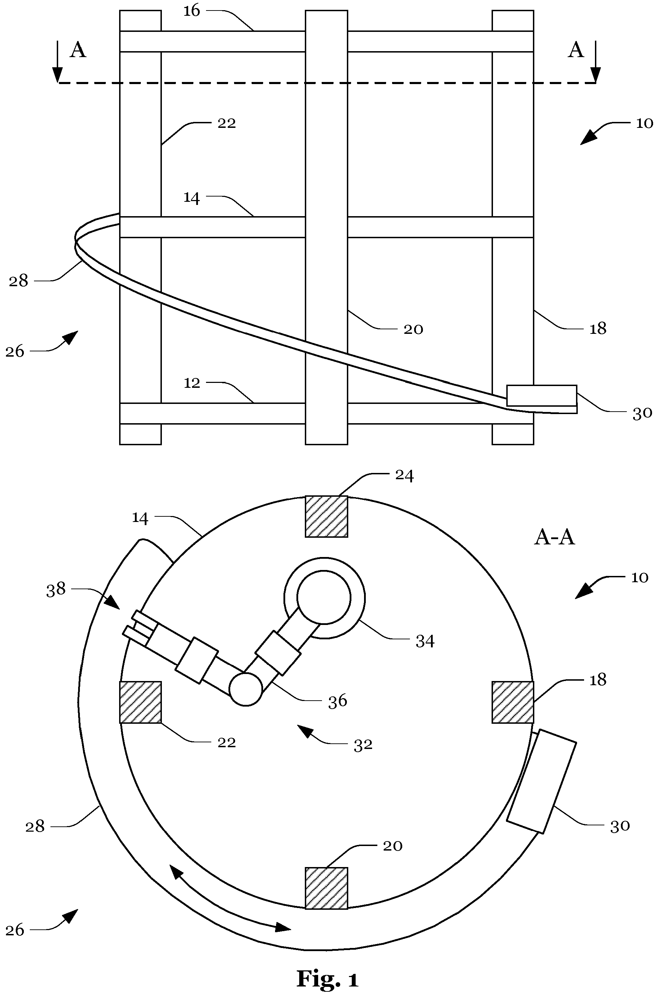

Fig. 1 shows a schematic side view and a schematic cross-sectional view of modular manufacturing tower 10, not forming part of the present invention as claimed. Modular manufacturing tower 10 comprises three circular platforms 12, 14, and 16 which are connected by (and rest on) four vertical columns 18, 20, 22, and 24. Vertical columns 18, 20, 22, and 24 have a rectangular cross-sectional shape and are placed at the four corners of a square. Vertical columns 18, 20, 22, and 24 extend through cut-outs in platforms 12, 14, and 16 such that the outwardly facing surface of each of vertical columns 18, 20, 22, and 24 is substantially flush with the edge of platforms 12, **14,** and 16.

Modular manufacturing tower 10 further comprises conveyor 26. Conveyor 26 is configured to transport items (not shown) circumferentially and vertically along a perimeter of modular manufacturing tower 10. Conveyor 26 comprises structure 28 which extends circumferentially along said perimeter of modular manufacturing tower 10. Conveyor 26 further comprises carrier 30 which is movable relative to structure 28. Structure 28 guides carrier 30 along an inclined path when carrier 30 moves relative to structure 28. For example, structure 28 may comprise one or two guide rails (not shown) and carrier 30 may run on structure 28 along said guide rails. Carrier 30 may have a motor and a controller which controls the direction in which and the speed at which carrier 30 moves relative to structure (not shown). Carrier 30 may also be passively towed by a towing means such as a belt, a chain or a cable (not shown). The belt, chain or cable may extend along or be integrated in structure 28. Structure 28 may comprise one or more pulleys and the belt, chain or cable may be guided by said pulleys (not shown).

Modular manufacturing tower 10 further comprises robot 32 which is mounted on platform 14. Robot 32 comprises (stationary) base 34 and kinematic chain 36 which extends from base 34. Kinematic chain 36 comprises end effector 38. End effector 38 is designed for retrieving items or a container comprising items from carrier 30. Another robot (not shown) which may be similar or identical to robot 32 may be mounted on platform 12. The items or a container containing the items (or an empty container) may be transported between robot 32 and the other robot on platform 12 by placing the items or the container on carrier 30.

Carrier 30 may comprise a cavity which is designed to accommodate one or more of the items or the container. Carrier 30 may also comprise an attachment portion (not shown). When loading the one or more items or the container onto carrier 30, the one or more items or the container may engage with the attachment portion such that the one or more items are securely fastened to carrier 30 during transport. For example, carrier 30 and/or one or more of the items or the container may comprise a recess into which a protrusion of the one or more items or the container or the carrier 30 extend, to engage carrier 30 and the one or more items or the container in an interlocking fashion. Carrier 30 may also comprise a magnet and the one or more items or the container may be secured to carrier 30 by magnetic force.

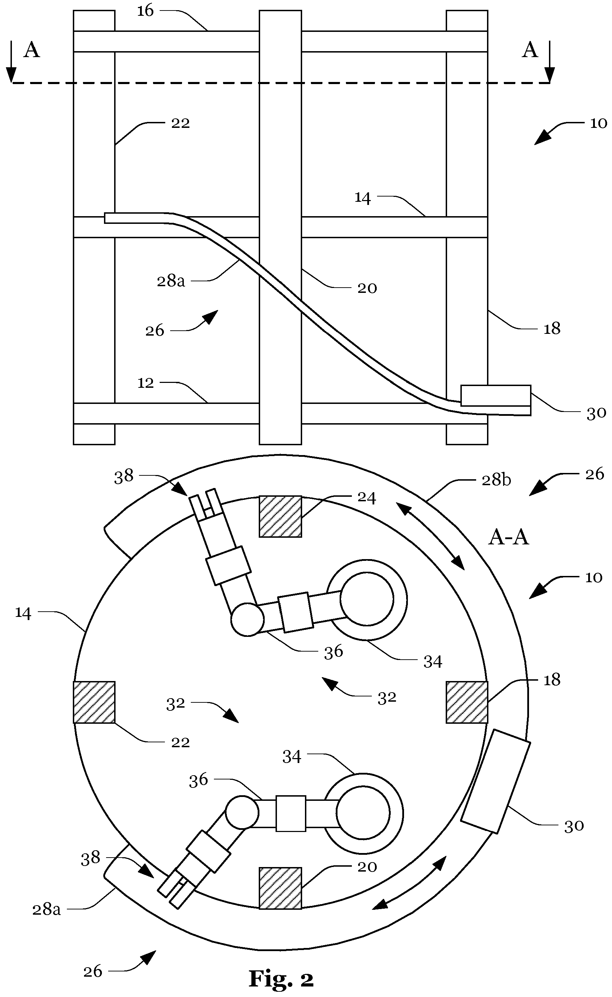

As shown in Fig. 2, relating to an example, not forming part of the present invention as claimed, wherein structure 28 may comprise two sections 28a and 28b, wherein each of sections 28a and 28b guides carrier 30 between a position at or near (or closer to) platform 14 and a position at or near (or closer to) platform 12, respectively. Being able to reach different positions at or near (or closer to) platform 14 may be beneficial if there are two robots 32 which may both be supplied with items, or which may both provide items that are to be transported to platform 12. While both robots 32 that are schematically illustrated in Fig. 2 may serve more than half of the area of platform 14, robots 32 may be used which may serve less than half of the area of platform 14 to avoid the danger of collision. Moreover, instead of one of robots 32 passing items to the other one of robots 32, both robots 32 may (individually) retrieve and deliver items to carrier 30 once carrier 30 is at the respective loading/unloading position.

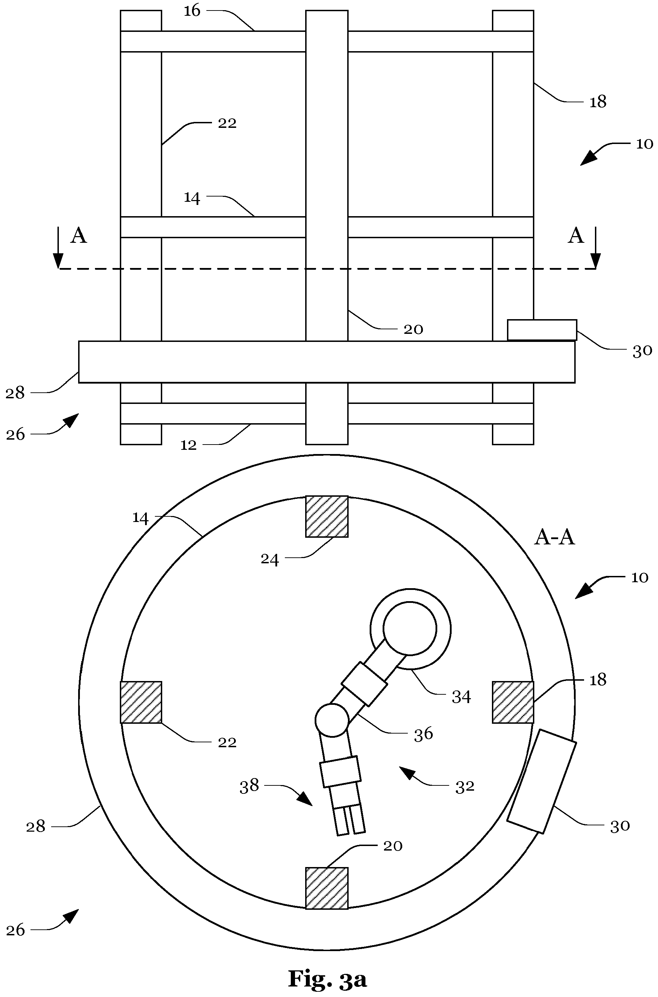

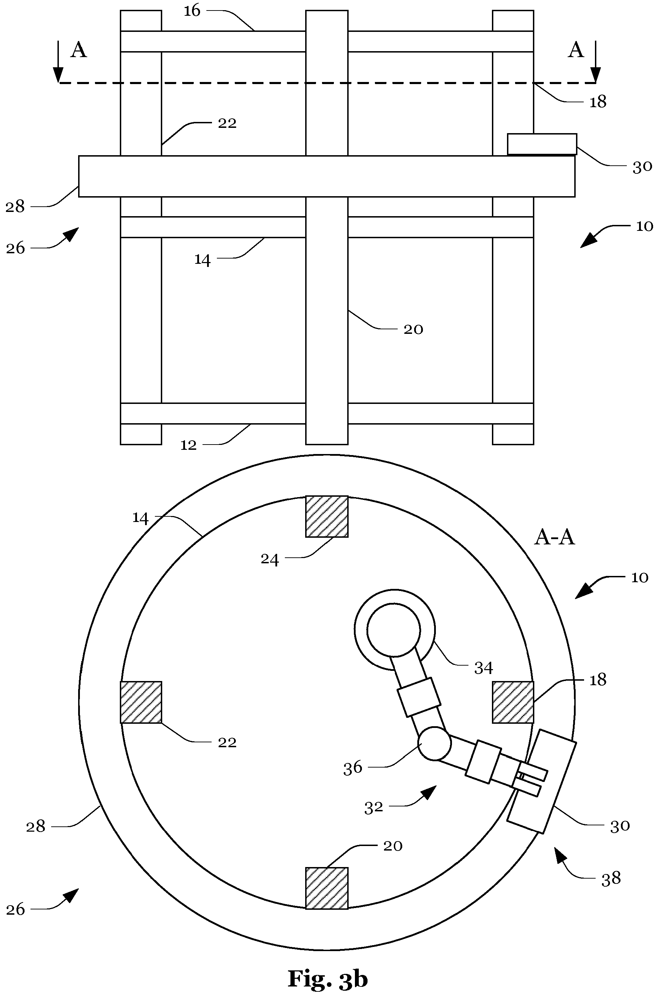

Fig. 3a illustrates an embodiment according to the present invention, where structure 28 forms a circular ring around a perimeter of modular manufacturing tower 10. Unlike structure 28 in Fig. 1 and Fig. 2, structure 28 in Fig. 3a allows moving carrier 30 along a closed path (e.g., along a circle lying in a horizontal plane). Moreover, structure 28 not only enables a horizontal movement of carrier 30 but also a vertical movement, as will be appreciated when comparing Fig. 3a and Fig. 3b. Fig. 3b depicts the same modular manufacturing tower 10 that is shown in Fig. 3a, with the sole difference that structure 28 has been moved in the vertical direction. Moving structure 28 in the vertical direction may be achieved by belts, chains or cables that may be integrated into columns 18, 20, 22, and 24 (not shown). For example, a belt, chain, or cable may run through each of columns 18, 20, 22, and 24 and structure 28 may be connected to the belt, chain or cable such that when the belt, chain or cable is moved, structure 28 is either lifted or lowered (in vertical direction). Structure 28 may also comprise cog wheels or pinions that mesh with rack rails in each of columns 18, 20, 22, and 24. Structure 28 may also be lifted by a hydraulic device.

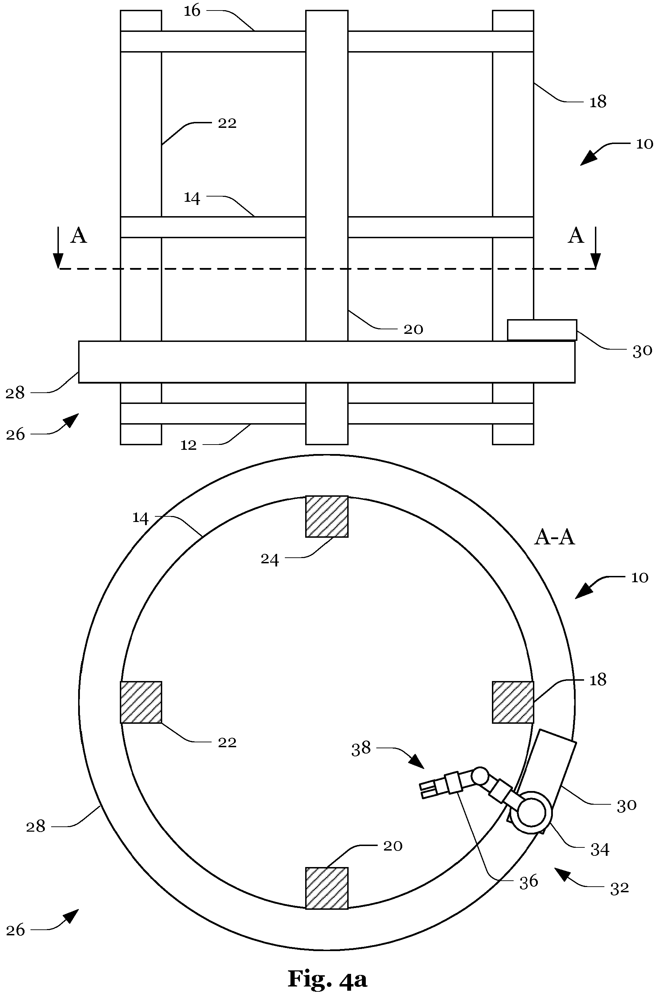

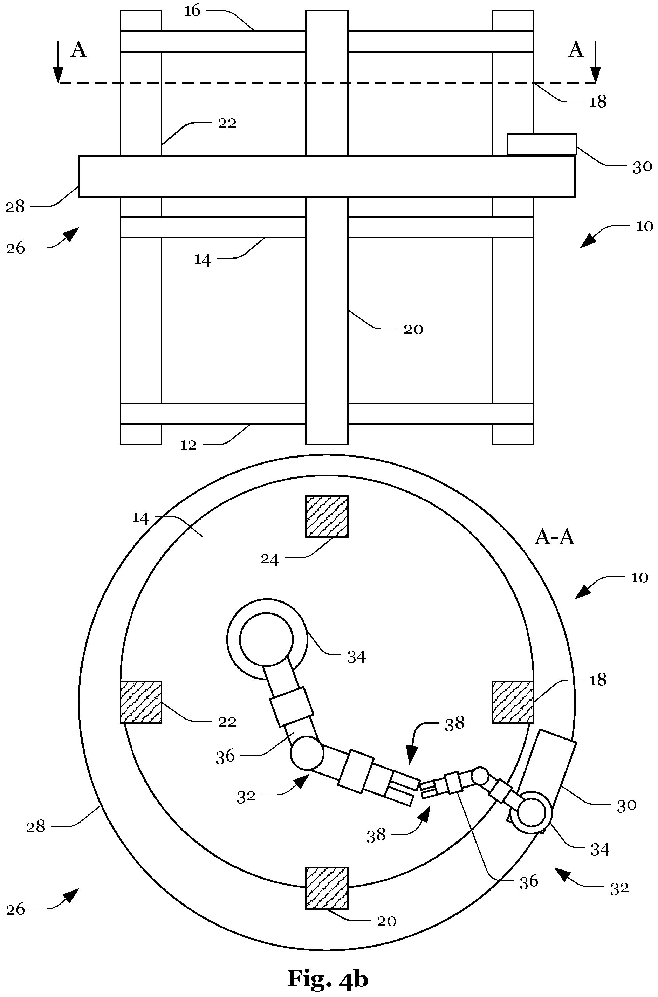

Fig. 4a and Fig. 4b illustrate a possible modification to modular manufacturing tower 10 where robot 32 is mounted on carrier 30. As schematically illustrated in Fig. 4a and Fig. 4b, robot 32 may pick up items (not shown) from platform 12 and provide said items to robot 32 on platform 14. Providing said items to robot 32 on platform 14 may involve placing said items at a position that can be reached by robot 32 on platform 14, or by robot 32 on platform 14 accepting items directly from robot 32 on carrier 30. In other examples, robots 32 may be mounted to both or none of platforms 12 and 14.

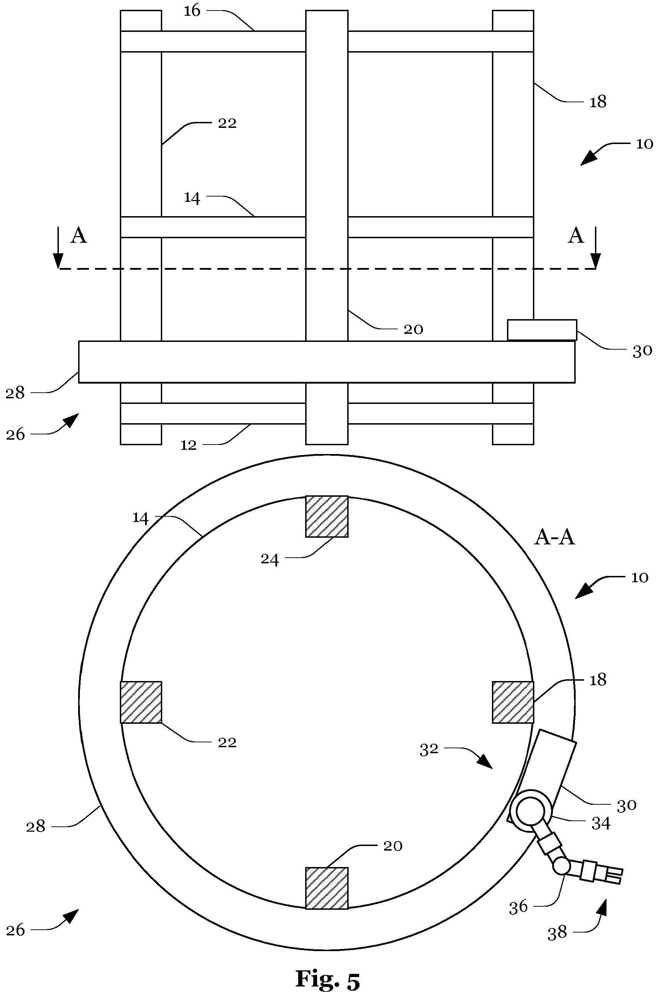

Fig. 5 illustrates a possible modification to modular manufacturing tower 10 where robot 32 mounted on carrier 30 is enabled to retrieve items from or to deliver items to the exterior of manufacturing tower 10.

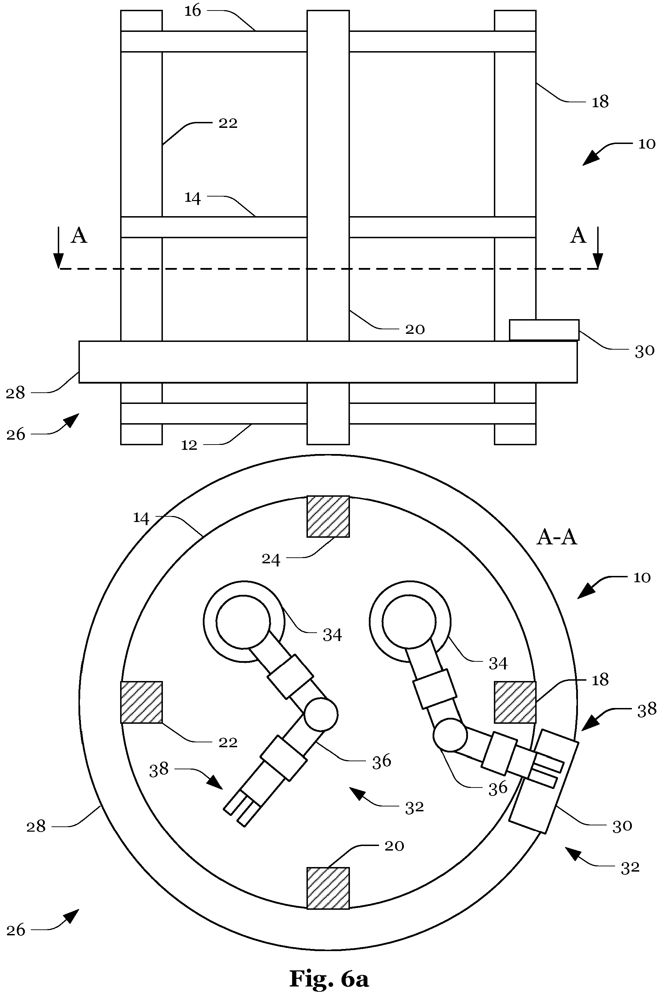

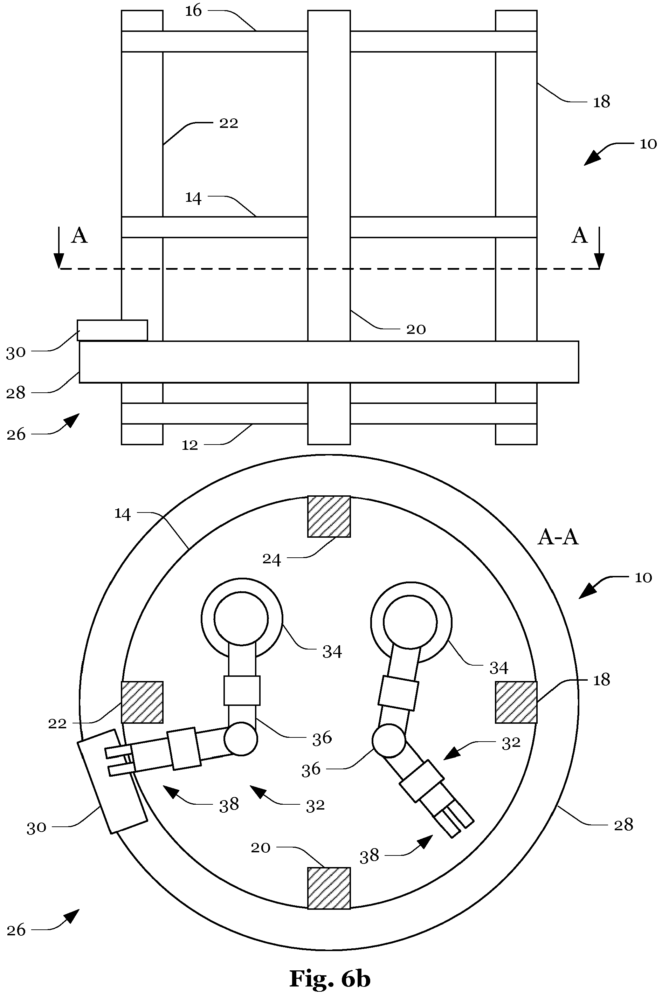

As illustrated by Fig. 6a and Fig. 6b, carrier 30 may be movable relative to structure 28 along a circle within a horizontal plane. Structure 28 may be provided with circular tracks and carrier 30 may run on those tracks (not shown). Structure 28 may also comprise a guide rail which may guide carrier 30 along a circular path relative to structure 28 (not shown). This allows moving carrier 30 at any position on the shell of modular manufacturing tower 10. In other words, conveyor 26 provides carrier 30 with two degrees of freedom allowing for vertical motion and horizontal motion (along a circle). Carrier 30 may thus be moved to any point on the lateral surface of a cylinder.

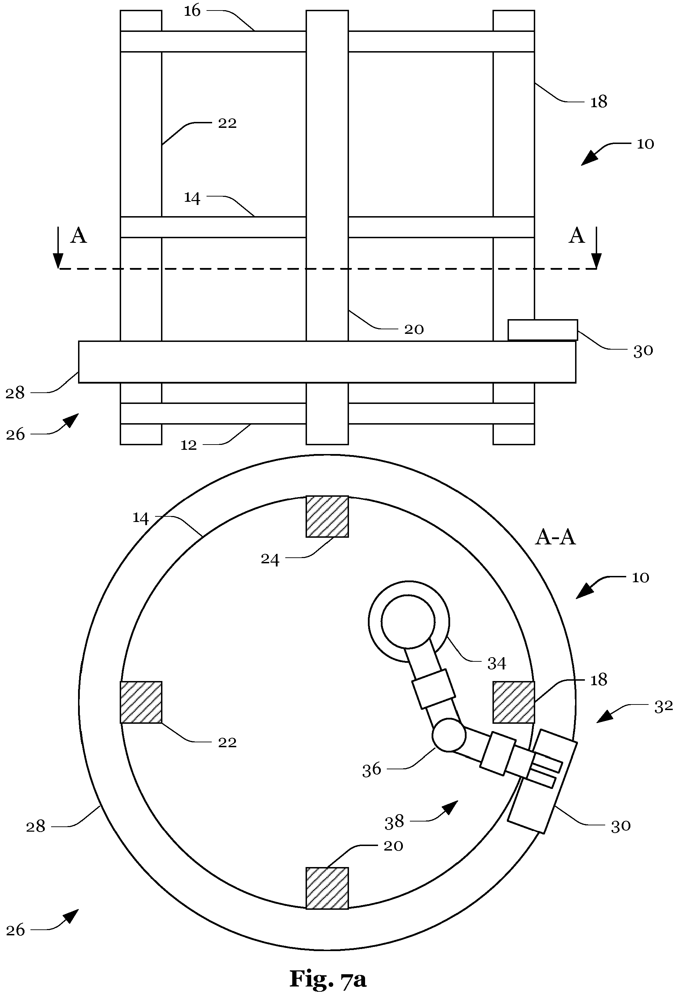

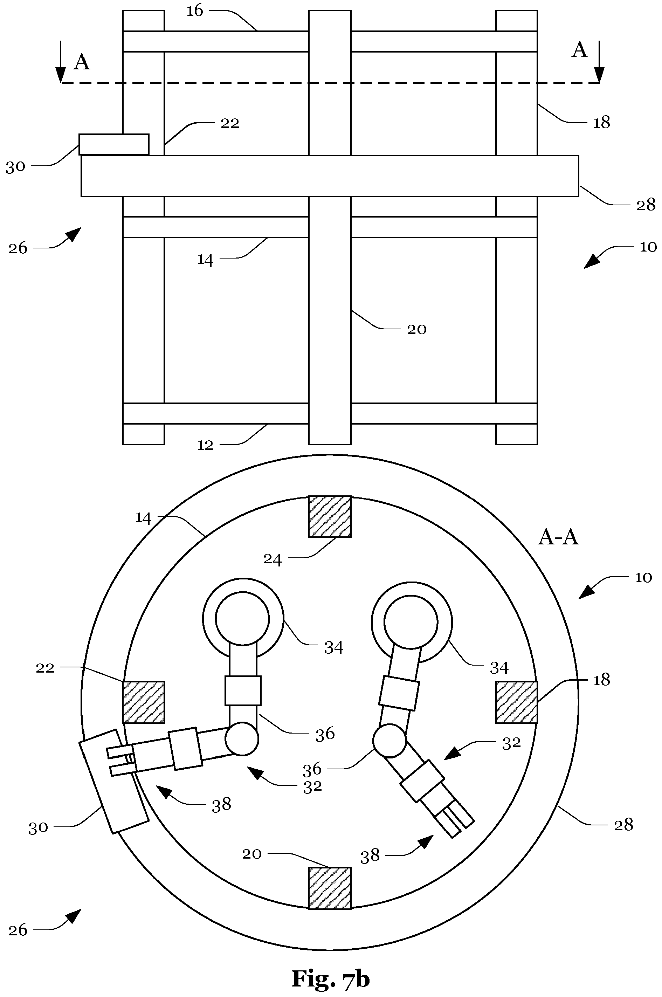

For example, as illustrated in Fig. 7a and Fig. 7b, carrier 30 may be positioned by concurrently moving structure 28 up (or down) and carrier 30 relative to structure 28. The motion of structure 28 (relative to platform 12, 14 and 16) and carrier 30 (relative to structure 28) may be controlled by the same entity, e.g., a local controller or a remote control unit (not shown). The local controller may react to sensor signals which indicate at which position carrier 30 is needed. For example, the local controller may react to a signal indicating that platform 14 runs short of items and send carrier 30 to a loading position at platform 12. Once carrier 30 has arrived at platform 12, the other robot may deliver one or more items or a container containing one or more items to carrier 30. Carrier 30 may then be ordered to an unloading position at platform 14 where one of robots 32 (or both) may collect the one or more items or the container. Notably, there may be more than one carrier 30 assigned to structure 28. For example, there may be two carriers 30 that use different segments of structure 28 or there may be two carriers 30 which use the same segment of structure 28 at different times.

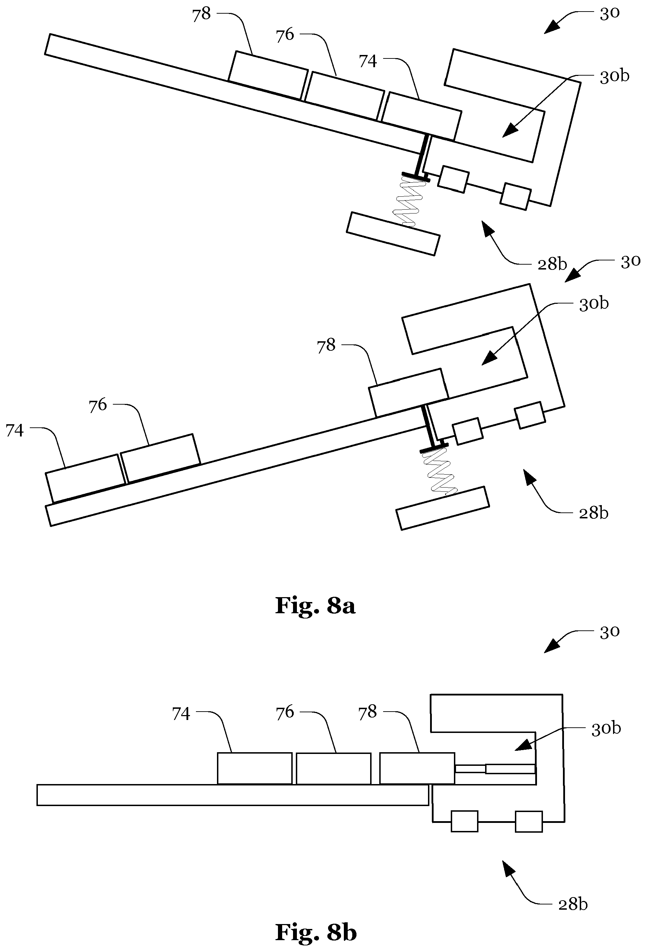

As schematically illustrated in Fig. 8a and Fig. 8b, carrier 30 may comprise compartment 30b into which items 74, 76 and 78 may be (successively) loaded. In Fig. 8a, conveyor 26 comprises a mechanism which causes item 74 (or a container containing item 74) to slide along a slope into compartment 30b when carriage 30 is in a loading position. In the loading position, carriage 30 actuates a release mechanism, which allows item 74 (or a container containing item 74) to slide into compartment 30b (e.g., caused by gravitational force). In the unloading position, carriage 30 is rotated such that item 78 (or a container containing item 78) slides out of compartment 30b. As schematically illustrated in Fig. 8b, an element within compartment 30b may be rotated or displaced such that item 78 (or a container containing item 78) is pushed out of compartment 30b.

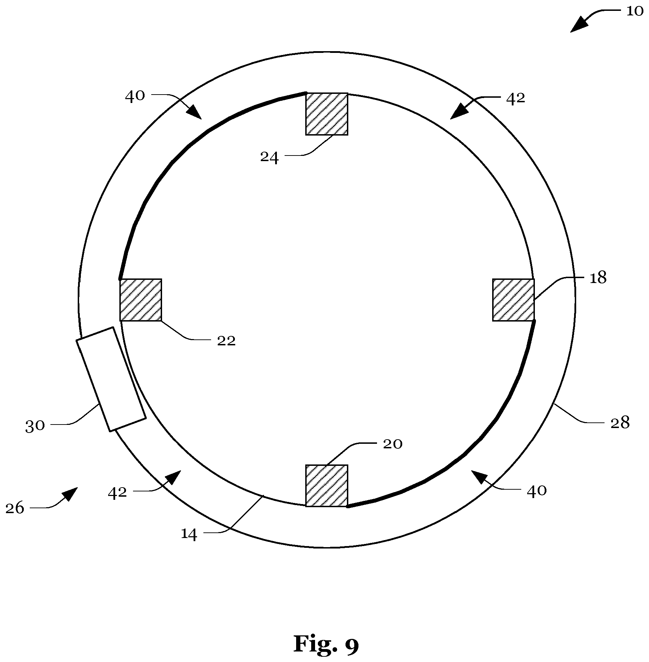

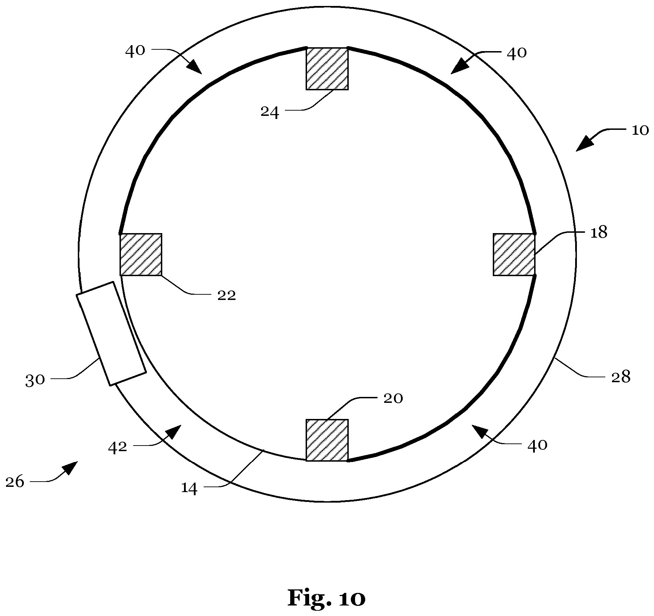

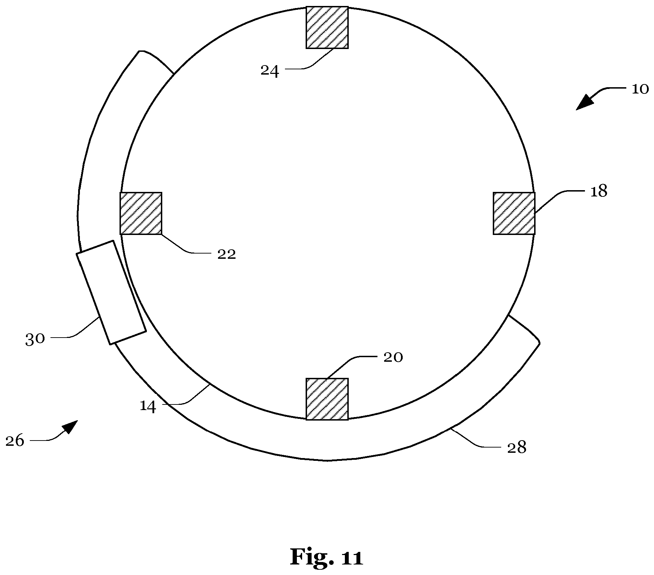

As illustrated in Fig. 9, the shell of modular manufacturing tower 10 may comprise closed segments 40 and open segments 42. The closed segments 40 may be arranged at opposite sides of modular manufacturing tower 10. The closed segments 40 may comprise a mesh (e.g., a wire mesh). The mesh may secure platforms 12, 14 and 16 against items falling off platforms 12, 14 and 16, respectively. As illustrated in Fig.10, there may be only a single open segment 42 which allows loading/unloading carrier 30. Moreover, there may be openings in one or more of the closed segments 40 (not shown). For instance, the shell of modular manufacturing tower 10 may be fully closed and there may be one or more openings in closed segments 40 which allow loading/unloading of carrier 30. Moreover, as illustrated in Fig. 11, structure 28 may only span a part of the perimeter of modular manufacturing tower 10 (and not allow for a closed path of carrier 30 around modular manufacturing tower 10).

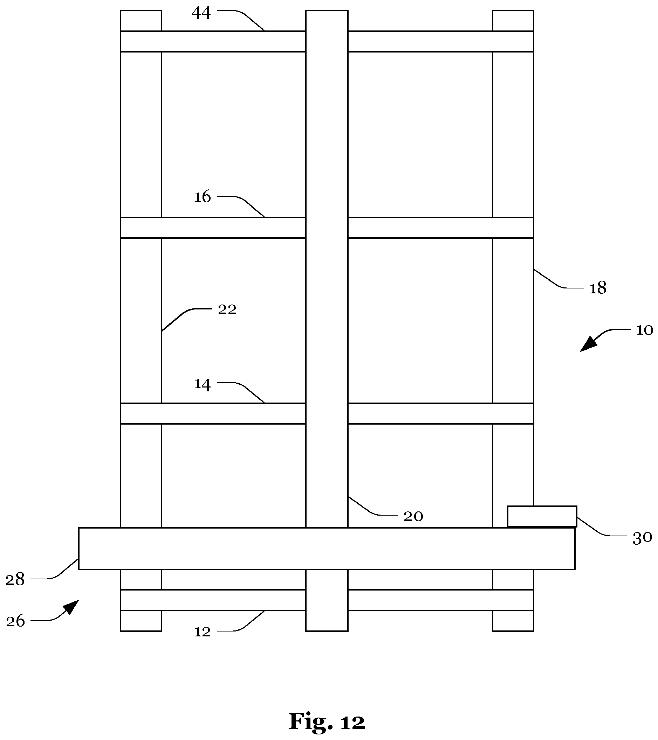

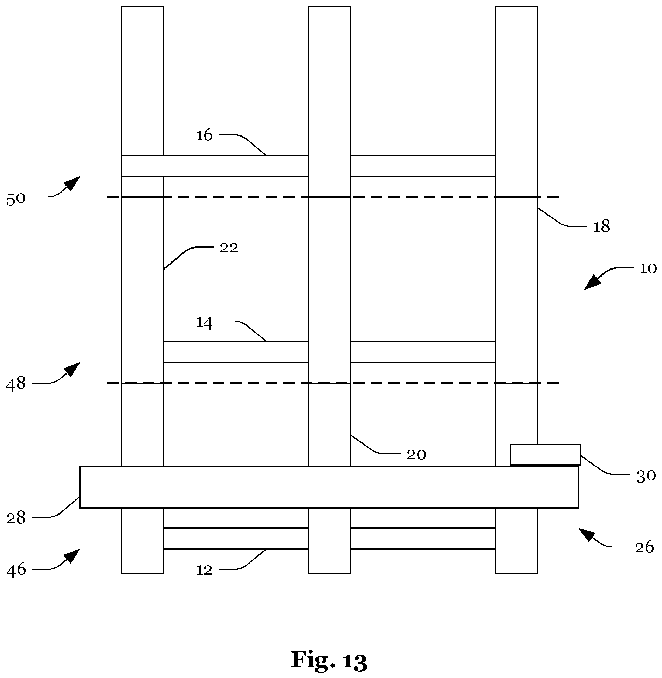

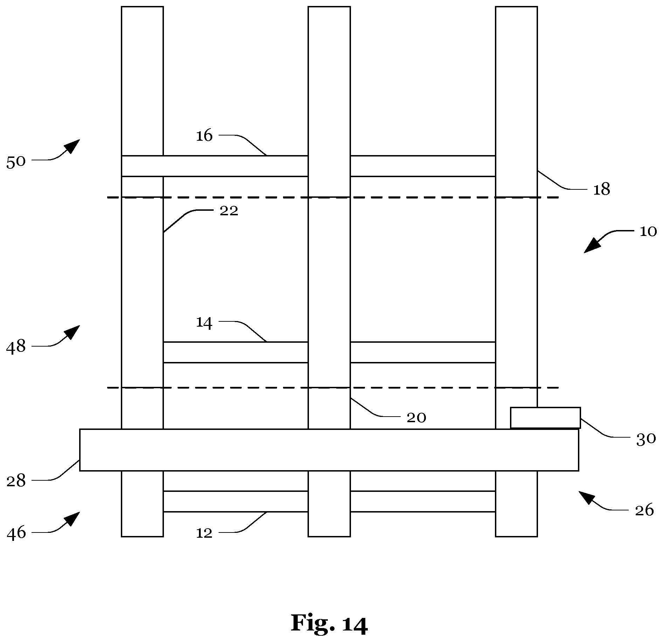

Fig. 12 illustrates how modular manufacturing tower 10 can be adjusted in height by adding one or more additional platforms 44. As illustrated in Fig. 13, modular manufacturing tower 10 may comprise segments 46, 48 and 50 of equal height. Each segment 46, 48 and 50 may comprise one of platforms 12, 14 and 16 and four (corresponding) column segments. Tower segments 46, 48 and 50 may also comprise matching bottom and top connectors (not shown). This further facilitates adapting modular manufacturing tower 10 to different demands as it allows adding or removing (entire) modules/segments. As illustrated in Fig. 14, segments 46, 48 and 50 may also be of different height.

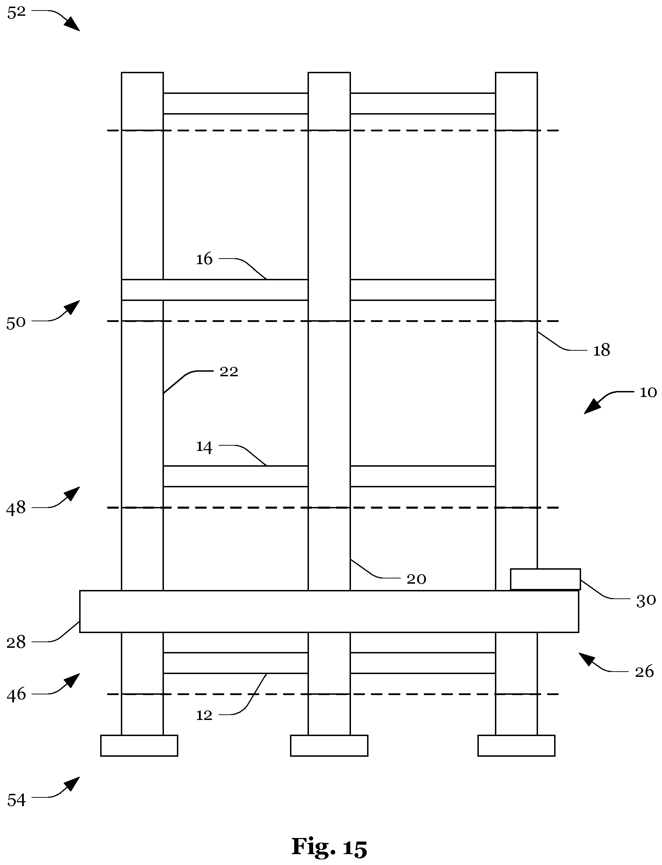

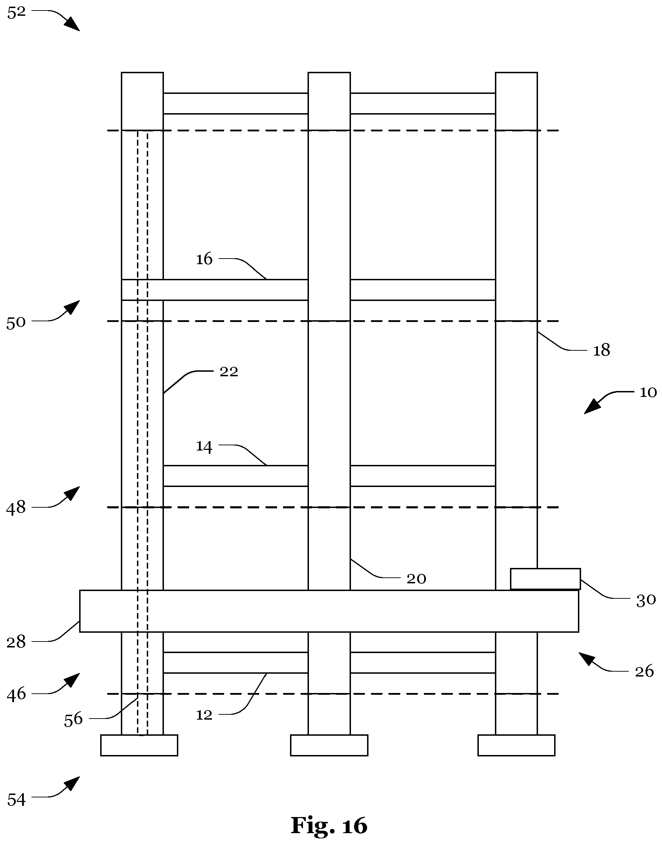

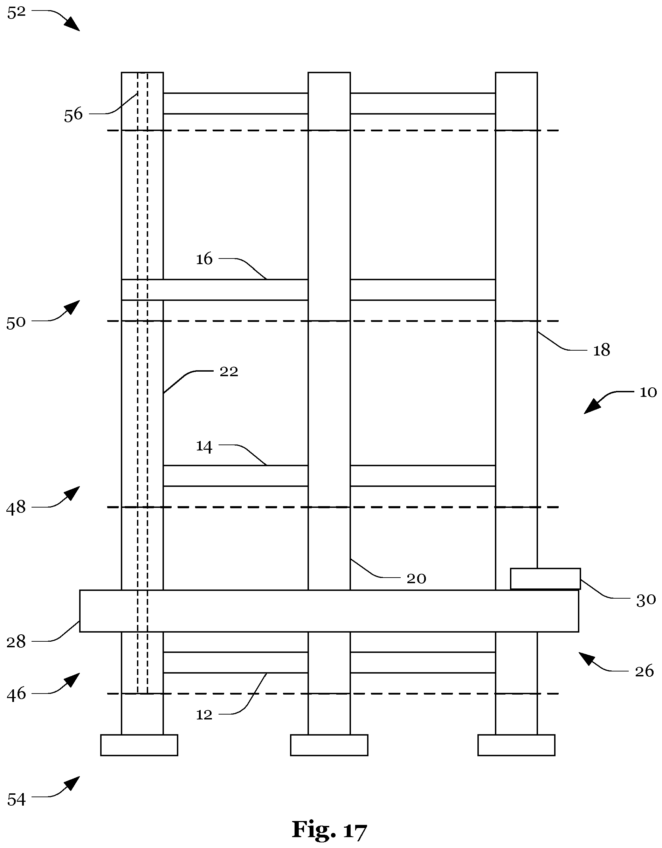

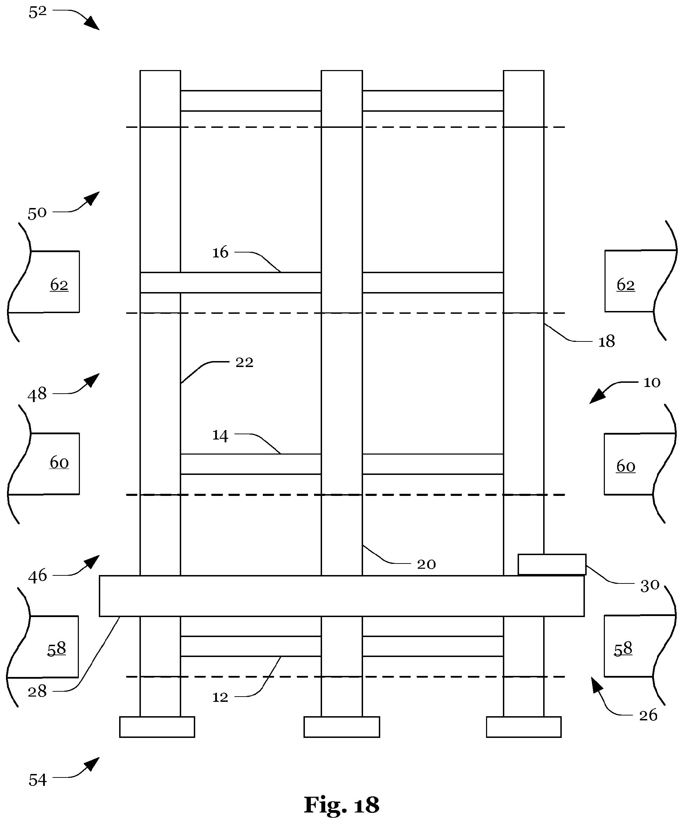

As shown in Fig. 15, modular manufacturing tower 10 may comprise top module 52 and bottom module 54. Bottom module 54 may facilitate anchoring modular manufacturing tower 10 to the floor of a building. For example, bottom module 54 may comprise feet that can be screwed to the floor. Moreover, as schematically illustrated in Fig. 16, power and/or supply lines 56 may extend from bottom module 54 upwards (through segments/modules 46, 48 and 50) or, as schematically illustrated in Fig. 17, from top module 52 (through segments/modules 50, 48 and 46) downwards. The power and/or supply lines may provide electric power and/or compressed air. As illustrated in Fig. 18, each segment/module 46, 48 and 50 may correspond (in height) to a story of a building in which modular manufacturing tower 10 is erected. For example, platform 12 may be at the level of ground floor 58, platform 14 may be at the level of first floor 60 and platform 16 may be at the level of second floor 62.

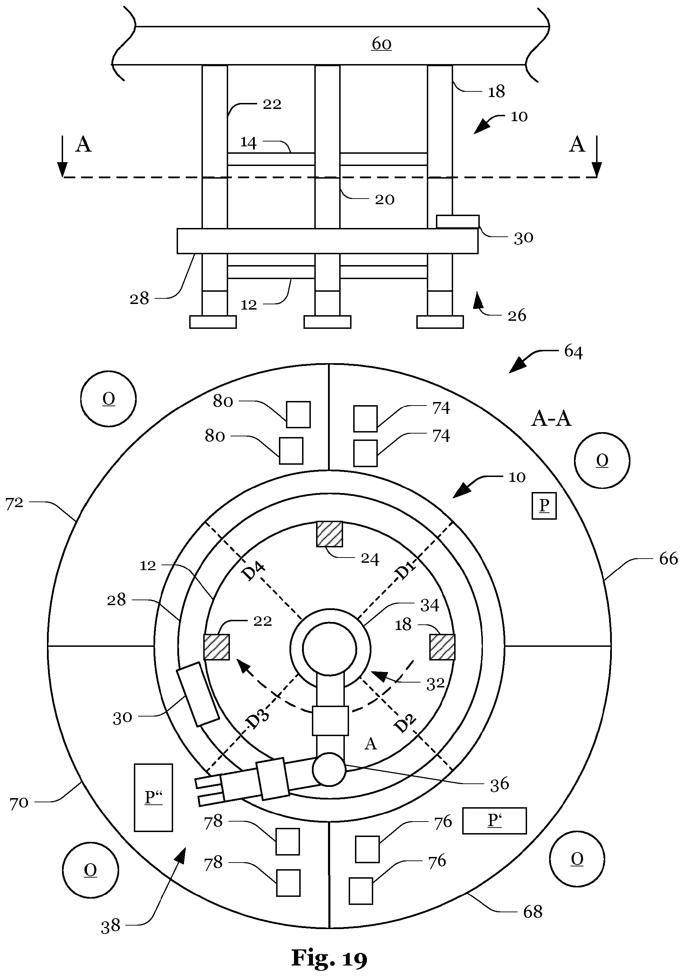

As illustrated in Fig. 19, modular manufacturing tower 10 may also fit in a single story of a building. Furthermore, modular manufacturing tower 10 may be integrated into manufacturing cell 64. Manufacturing cell 64 comprises robot 32 and workstations 66, 68, 70 and 72. Workstations 66, 68, 70 and 72 are arranged around robot 32. Each of workstations 66, 68, 70 and 72 may be occupied by one or more operators O who add items 74, 76, 78 and 80 to partially assembled products P, P' and P" (or perform another operation for which items 74, 76, 78 and 80 are required), respectively. Once the manufacturing step is completed at workstation 66, 68, 70 or 72, the partially assembled products P, P' and P" (or the otherwise processed items 74, 76, 78 and 80) may be passed clockwise to the next one (indicated in Fig. 19 by the broken-line arrow) or transported to another manufacturing cell 64 or any other unit (not shown). The partially assembled products P, P' and P" (or the otherwise processed items 74, 76, 78 and 80) may also be passed counterclockwise to the next one of workstations 66, 68, 70, and 72. Robot 32, or rather an end effector (e.g. a gripping or suction device) coupled to robot 32, may be used to pass the partially assembled products P, P' and P" (or the otherwise processed items 74, 76, 78 and 80) from workstation 66 to workstation 68, wherein both workstations 66 and 68 are assigned to manufacturing cell 64 and/or from workstation 66 of manufacturing cell 64 to a workstation of another manufacturing cell (not shown).

If workstation 66 runs out or is about to run out of items 74, which are required in the manufacturing process, robot 32 may replenish the stock of items 74 available at workstation 66. If workstation 68 runs out or is about to run out of items 76, which are required in the manufacturing process, robot 32 may replenish the stock of items 76 available at workstation 68. If workstation 70 runs out or is about to run out of item 78, which are required in the manufacturing process, robot 32 may replenish the stock of items 78 available at workstation 68. If different types of items 74, 76, 78 and 80 are required at any one of workstations 66, 68, 70 or 72, robot 32 may supply all or only some of said types of items 74, 76, 78 and 80 to workstations 66, 68, 70 and 72, respectively. If there are one or more additional robots (not shown), different types of items 74, 76, 78 and 80 may be supplied by different robots. In other words, various modifications may be made to the example shown in Fig. 19 which is merely intended to conceptually illustrate that items 74, 76, 78 and 80 are supplied to workstations 66, 68, 70 or 72 by robot 32. Replenishment may be triggered manually (by the operators O) or automatically if a sensor measurement reveals that one of workstations 66, 68, 70 and 72 runs out or is about to run out of items 74, 76, 78 and 80, respectively.

For example, a weight of a stock of items 74, 76, 78 and 80 available at workstations 66, 68, 70 and 72, respectively, may be measured, a height of a stock of items 74, 76, 78 and 80 available at workstations 66, 68, 70 and 72, respectively, may be measured, and/or the stock of items 74, 76, 78 and 80 available at workstations 66, 68, 70 and 72, respectively, may be visually inspected. Furthermore, a need for replenishment may be determined based on partially assembled products P, P' and P" (or otherwise processed items 74, 76, 78 and 80). Moreover, instead of replenishing a stock of items 74, 76, 78 or 80 if one of workstations 66, 68, 70 and 72 runs out or is about to run out of items 74, 76, 78 and 80, respectively, items 74, 76, 78 and 80 may be constantly supplied by robot 32 to workstations 66, 68, 70 and 72, respectively. The supply rate of items 74, 76, 78 and 80 to workstations 66, 68, 70 and 72 may be fixed, based on measurements regarding the available stock, and/or based on a number of partially assembled products P, P' and P" (or otherwise processed items 74, 76, 78 and 80), respectively.

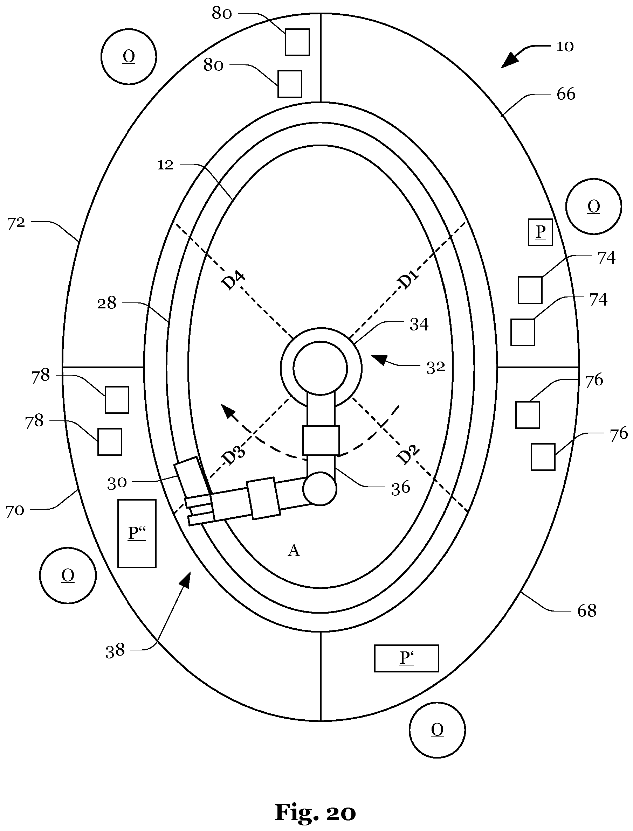

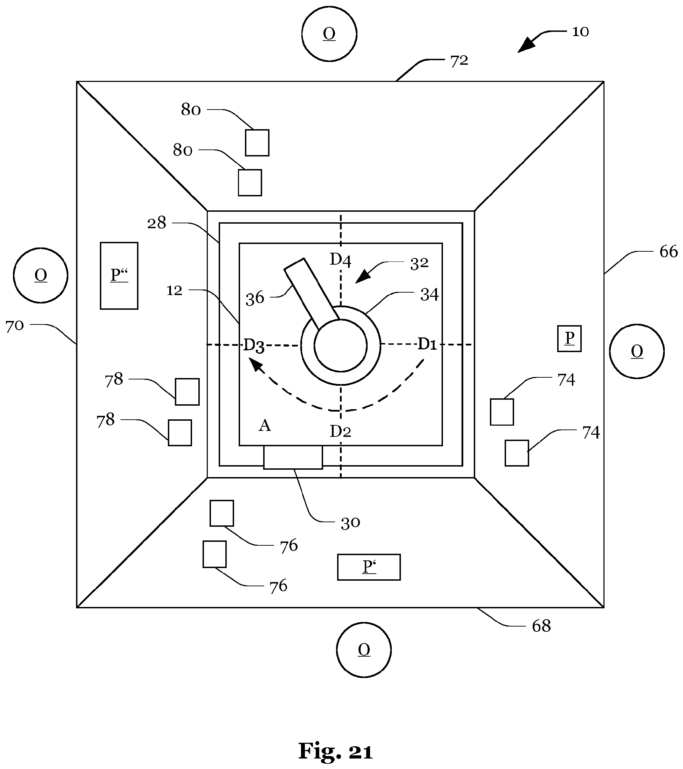

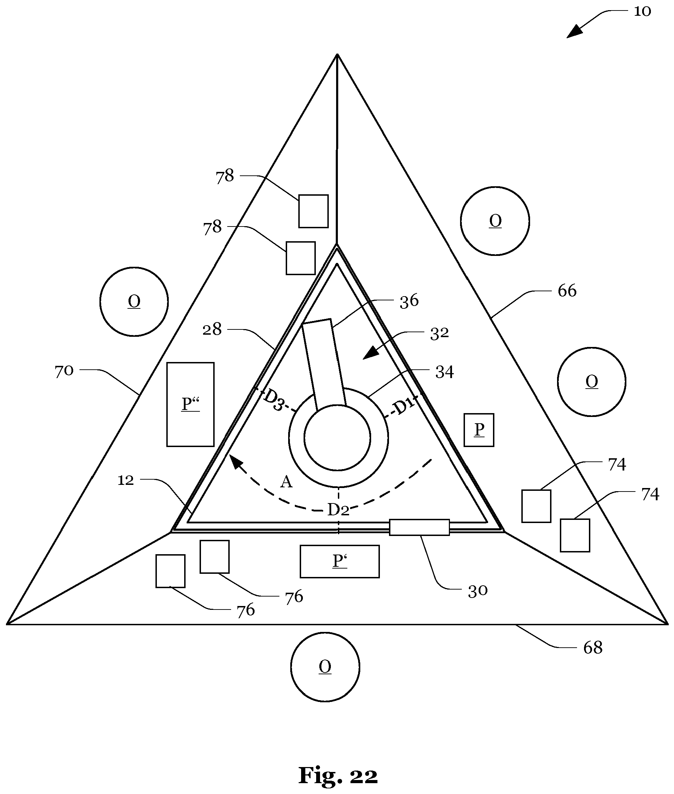

As shown in Fig. 20, Fig. 21 and Fig. 22, manufacturing cell 64 may come in various shapes (when seen in top view) including, but not limited to, a substantially convex shape such as a convex rounded shape (ellipsoid, etc.) and a convex polygon shape (triangular, rectangular, etc.). The shape of manufacturing cell 64 may be defined by the outer edges of workstations 66, 68, 70 and 72 projected in a horizontal plane. Manufacturing cell 64 may have a modular design, wherein a shape of workstations 66, 68, 70 and 72 projected onto a horizontal plane may be substantially identical. Manufacturing cell 64 may be comprised of a rigid (rod) frame and boards (e.g., tabletops) mounted to the frame, wherein each of workstations 66, 68, 70 and 72 comprises boards of substantially the same width, length, and height (not shown).

As shown in Fig. 20, Fig. 21 and Fig. 22, workstations 66 and 70 may be arranged at opposite sides of robot 32. If workstations 66 and 70 are arranged at opposite sides of robot 32, robot 32 may be enabled to rotate around a vertical axis (extending through base 34). Moreover, workstations 66 and 68 may be placed side-by-side to facilitate passing partially assembled products P and P' (or otherwise processed items 74 and 76) from one workstation 66 and 68 to the other workstation 68 and 70, respectively. Passing partially assembled products P and P' (or otherwise processed items 74 and 76) from one workstation 66 and 68 to the other workstation 68 and 70, respectively, may be performed manually by the operators O, through conveyors (not shown) and/or - as already mentioned above - by robot 32. For example, there may be an inclined or powered roller track which guides the partially assembled products P and P' (or otherwise processed items 74 and 76) from one workstation 66 and 68 to the other workstation 68 and 70, respectively. A sensor (not shown) along a conveyor (not shown) may be used to determine the number of partially assembled products P and P' (or otherwise processed items 74 and 76).

If distances D1, D2, D3 and D4 (only for Fig. 19, Fig. 20, and Fig. 21) between base 34 of robot 32 and workstations 66, 68, 70 and 72 are substantially equal, as shown in Fig. 19, Fig. 20, Fig. 21 and Fig. 22, base 34 may be horizontally immovable or stationary. If distances D1, D2, D3 and D4 (only for Fig. 19, Fig. 20, and Fig. 21) between base 34 of robot 32 and workstations 66, 68, 70 and 72 are not substantially equal, base 34 may be horizontally movable within area A which is surrounded by workstations 66, 68, 70 and 72. Moreover, if area A is too large for robot 32, base 34 may be horizontally movable within area A. For example, base 34 may be linearly movable along the semi-major axes of area A in manufacturing cell 64 of Fig. 20.

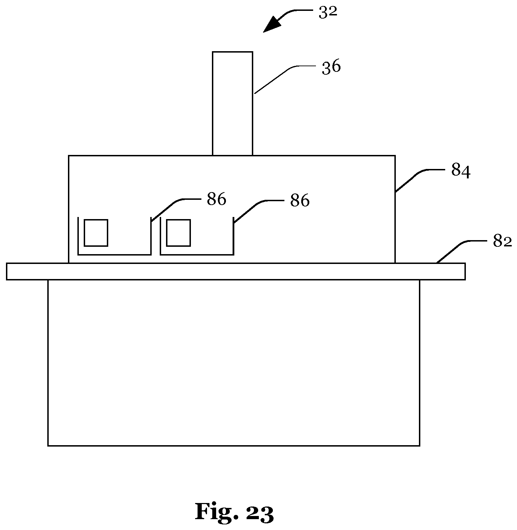

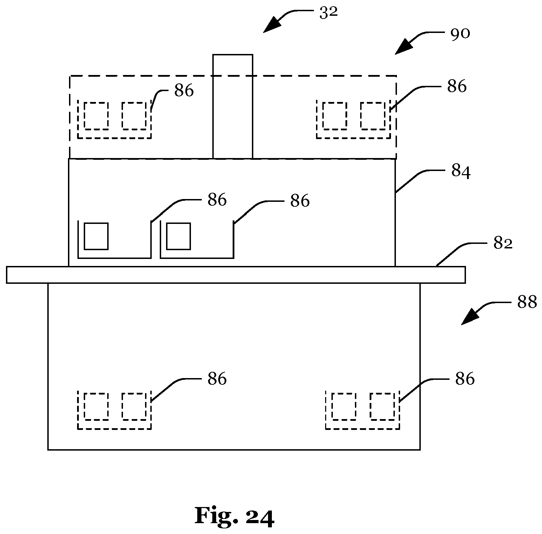

Fig. 23 shows a schematic front view of workstations 66, 68, 70 and 72. Each of workstations 66, 68, 70 and 72 comprises work desk 82 and rack 84. Rack 84 has one or more (inclined) shelves (not shown) for taking up storage bins 86. When supplying workstation 66, 68, 70 or 72 with items 74, 76, 78 or 80, respectively, robot 32 may retrieve items 74, 76, 78 or 80, or storage bins 86 containing items 74, 76, 78 or 80 from store 88, which is arranged below work desk 82 or from store 90, which is arranged above rack 84, as schematically illustrated in Fig. 24. Moreover, items 74, 76, 78 or 80 or storage bins 86 containing items 74, 76, 78 or 80 may be retrieved from a store (not shown) which is arranged in area A. If area A is not used as storage space, less restrictions may apply as regards the trajectories along which an end-effector of robot 32 may travel.

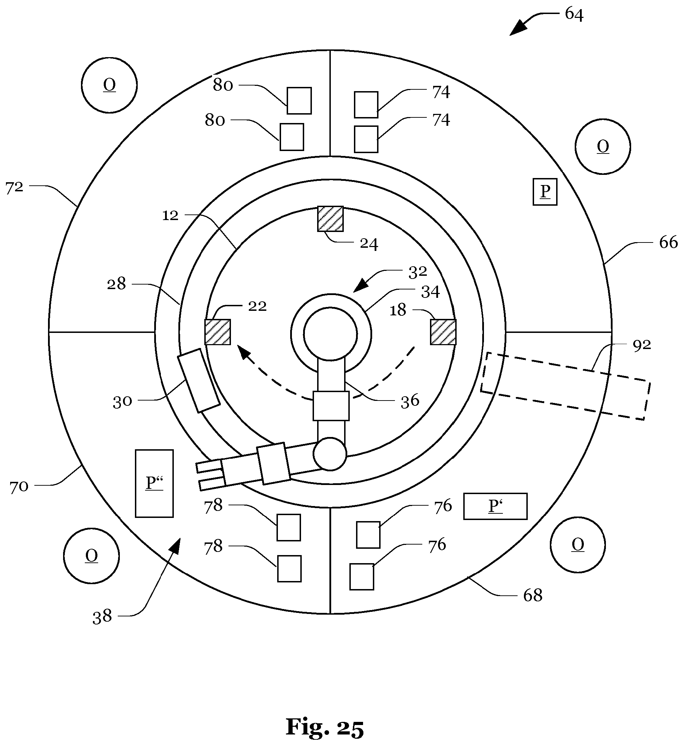

Fig. 25 schematically illustrates a horizontal conveyor 92 for supplying robot 32 with items 74, 76, 78 or 80 or storage bins 86 containing items 74, 76, 78 or 80. Horizontal conveyor 92 may allow robot 32 to exchange items 74, 76, 78 or 80 or storage bins 86 (containing items 74, 76, 78 or 80) with another entity outside of manufacturing cell 64. For example, another conveyor (not shown), an (autonomous) robot (not shown) or a vehicle (not shown) may provide manufacturing cell 64 with items 74, 76, 78 or 80 or storage bins 86 containing items 74, 76, 78 or 80 upon demand by robot 32, by another entity such as a local control unit (i.e., a control unit placed in or assigned to manufacturing cell 64; not shown) or a central control unit (not shown) or in accordance with a fixed schedule.

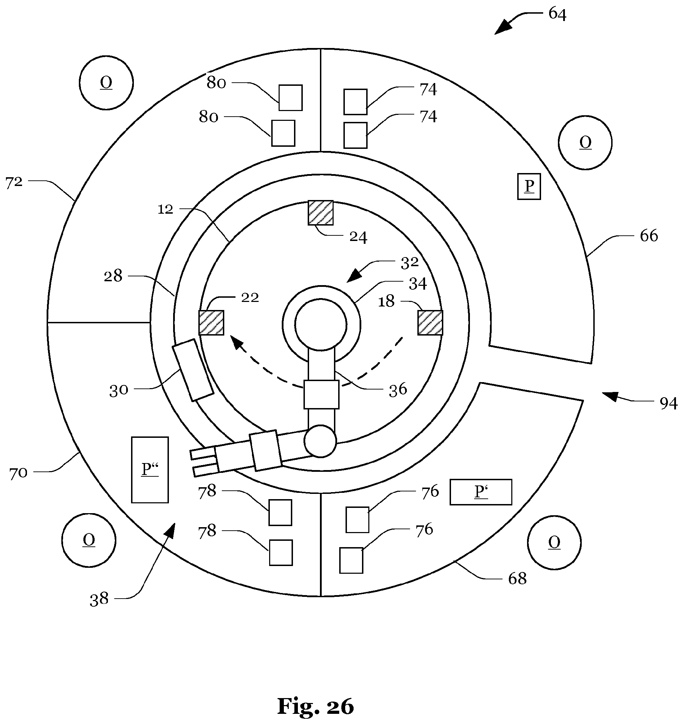

Fig. 26 illustrates an alternative to horizontal conveyor 92 of Fig. 25. In Fig. 26, horizontal conveyor 92 is replaced by passage 94. Passage 94 may allow an (autonomous) robot (not shown) to provide items 74, 76, 78 or 80 or storage bins 86 containing items 74, 76, 78 or 80 directly to robot 32. Moreover, passage 94 may facilitate accessing robot 32 for maintenance and repair. As shown in Fig. 26, the width of passage 94 may be substantially constant when advancing from the periphery to the inner edge of manufacturing cell 64. However, the width of passage 94 may also (steadily) decline when advancing from the periphery to the center of manufacturing cell 64.

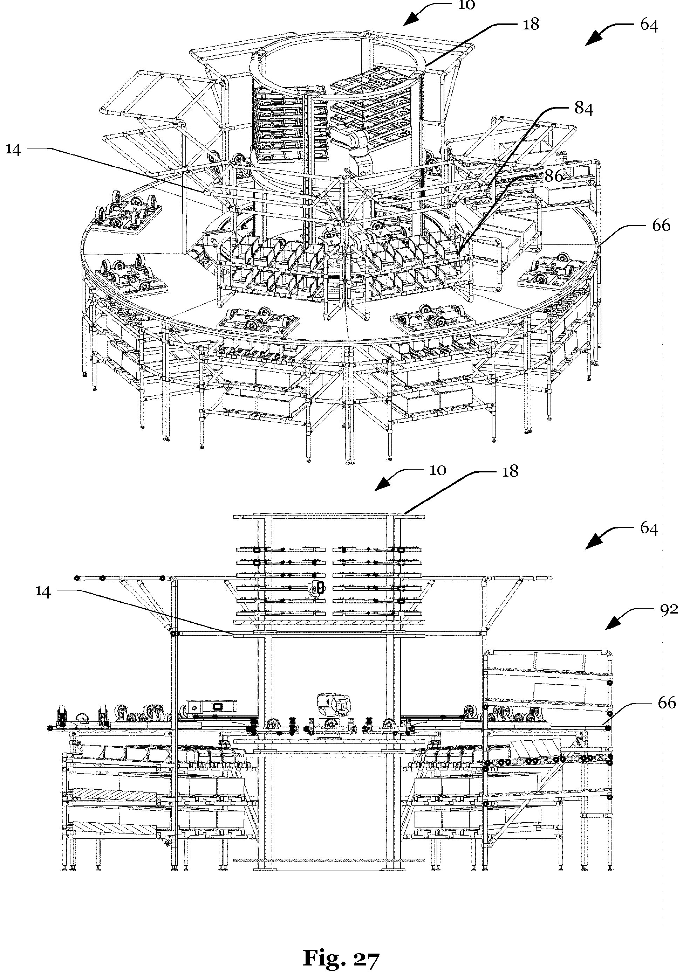

As shown in Fig. 27, manufacturing cell 64 may comprise a frame made of interconnected rods. The frame supports a plurality of tabletop segments that are placed side-by-side on the frame. The frame also supports shelves for storage bins 86 containing items 74, 76, 78 or 80. Store 90 may also be integrated into (or form part of) the structure supporting the tabletops and storage bins 86 containing items 74, 76, 78 or 80. Robot 32 which is arranged at the center of manufacturing cell 64 is rotatable around a vertical axis and comprises several (rotary) joints and links and an end effector for handling storage bins 86 and/or items 74, 76, 78 or 80. From the periphery to the center of manufacturing cell 64, there is a step (in height) at the intersection between the tabletops and the shelves for storage bins 86.

As shown in Fig. 27, horizontal conveyor 92 may also be used to supply items 74, 76, 78 or 80 directly to robot 32. Robot 32 may pick items 74, 76, 78 or 80 or storage bins 86 containing items 74, 76, 78 or 80 from conveyor 92 and store items 74, 76, 78 or 80 or storage bins 86 containing items 74, 76, 78 or 80 in one of stores 90 and 92 of manufacturing cell 64. Stores 90 and/or 92 (which are assigned to manufacturing cell 64) and robot 32 (which is enabled to store and retrieve store items 74, 76, 78 or 80 or storage bins 86 containing items 74, 76, 78 or 80) form a (private) automated warehouse of manufacturing cell 64. Manufacturing cells 64 may be placed adjacent to each other, such that two manufacturing cells 64 form a figure of eight (not shown). This facilitates passing partially assembled products P, P' and P" (or otherwise processed items 74, 76, 78 and 80) between manufacturing cells 64.

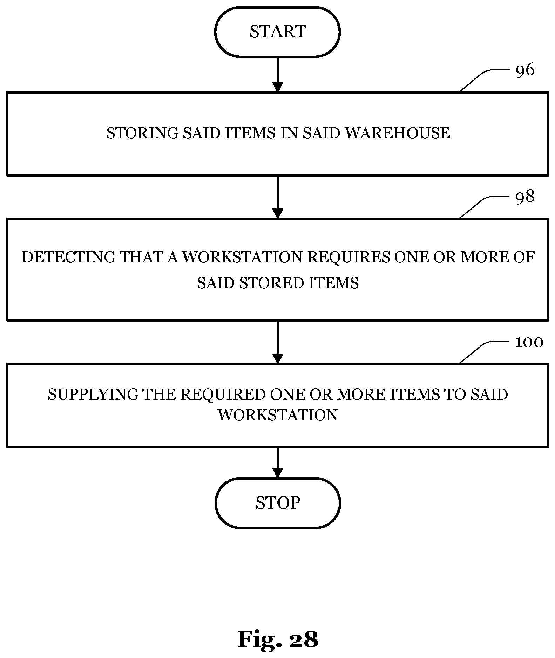

Fig. 28 shows a flowchart of the method. The method starts at block 96 with storing items 74, 76, 78 80 in said warehouse. At block 98, it is detected that workstation 66, 86, 70 or 72 requires one or more of stored items 74, 76, 78 or 80, respectively. At block 100, one or more items 74, 76, 78 and 80 are supplied to workstation 66, 68, 70 and 72, respectively.

### Reference Signs List

- 10: tower
- 12: platform
- 14: platform
- 16: platform
- 18: column
- 20: column
- 22: column
- 24: column
- 26: conveyor
- 28: structure
- 28b: track
- 30: carrier
- 30b: compartment
- 32: robot
- 34: base
- 36: kinematic chain
- 38: end effector
- 40: closed segment
- 42: open segment
- 44: platform
- 46: segment
- 48: segment
- 50: segment
- 52: top module
- 54: bottom module
- 56: line
- 58: floor
- 60: floor
- 62: floor
- 64: manufacturing cell
- 66: workstation
- 68: workstation
- 70: workstation
- 72: workstation
- 74: item
- 76: item
- 78: item
- 80: item
- 82: work desk
- 84: rack
- 86: storage bin
- 88: store
- 90: store
- 92: conveyor
- 94: passage
- 96: step
- 98: step
- 100: step
- A: area
- D1: distance
- D2: distance
- D3: distance
- D4: distance
- O: operator
- P: product
- P': product
- P": product

## Claims

1. A modular manufacturing tower (10), comprising:
a first platform (12);
a second platform (14); and
a conveyor (26);
wherein the second platform (14) is arranged above the first platform (12); and
wherein the conveyor (26) is configured to transport items (74, 76, 78, 80) vertically between the platforms (12, 14, 16, 44);
wherein the conveyor (26) is further configured to transport items (74, 76, 78, 80) circumferentially along a perimeter of the manufacturing tower (10);
wherein
the conveyor (26) comprises a structure (28) extending circumferentially along the perimeter of the manufacturing tower (10);
the structure (28) is vertically movable to transport items (74, 76, 78, 80) vertically between the platforms (12, 14, 16, 44); and
the modular manufacturing tower (10) further comprises a first robot (36) mounted on the first platform (12) and/or a second robot (32) mounted on the second platform.

2. The modular manufacturing tower (10) of claim 1,
wherein the conveyor (26) further comprises a carrier (30) which is movable relative to the structure (28).

3. The modular manufacturing tower (10) of claim 2,
wherein the carrier (30) is movable along a closed path around the perimeter of the manufacturing tower (10).

4. The modular manufacturing tower (10) of claim 2 or 3, wherein the structure (28) is a ring-shaped structure (28).

5. The modular manufacturing tower (10) of claim 4, wherein the platforms (12, 14, 16, 44) have an elliptical or circular shape.

6. The modular manufacturing tower (10) of any one of claims 1 to 5, further comprising a third platform (16), wherein the third platform (16) is arranged above the second platform (14).

7. The modular manufacturing tower (10) of claim 6, wherein the manufacturing tower (10) comprises a first at least partially automated manufacturing cell between the first platform (12) and the second platform (14), and a second at least partially automated manufacturing cell between the second platform (14) and the third platform (16).

8. The modular manufacturing tower (10) of any one of claims 1 to 7, further comprising a first column (18), the first column (18) connecting the first platform (12) and the second platform (14) and supporting the second platform (14).

9. The modular manufacturing tower (10) of claim 8, further comprising a second column and a third column (20, 22, 24), the second column and the third column (20, 22, 24) connecting the first platform (12) and the second platform (14) and supporting the second platform (14).

10. The modular manufacturing tower (10) of claim 8 or 9, wherein the structure (28) is slidably attached to the first column (18).

11. The modular manufacturing tower (10) of any one of claims 1 to 10, wherein the first column (18) comprises vertically stacked segments of substantially equal length.

12. A manufacturing cell (64), comprising:
a modular manufacturing tower (10) of any one of claims 1 to 11;
a first workstation (66);
a second workstation (68); and
a third workstation (70);
wherein the workstations (66, 68, 70) are arranged around the manufacturing tower (10).

13. The manufacturing cell (64) of claim 12, further comprising:
a robot (32), wherein the robot (32) is placed inside the manufacturing tower (10) and is configured to supply first items (74) to the first workstation (66), second items (76) to the second workstation (68) and third items (78) to the third workstation (70).

14. The manufacturing cell (64) of claim 13, wherein the first workstation (66) comprises a first rack (84) for a plurality of first storage bins (86) and wherein said robot (32) is configured to supply the first storage bins (86) containing the first items (74) to the first rack (84) or to supply the first items (74) to the first storage bins (86) in the first rack (84).

## Patentansprüche

1. Modularer Fertigungsturm (10), umfassend:
eine erste Plattform (12);
eine zweite Plattform (14); und
eine Fördereinrichtung (26);
wobei die zweite Plattform (14) oberhalb der ersten Plattform (12) angeordnet ist; und
wobei die Fördereinrichtung (26) eingerichtet ist, Gegenstände (74, 76, 78, 80) vertikal zwischen den Plattformen (12, 14, 16, 44) zu transportieren;
wobei die Fördereinrichtung (26) ferner eingerichtet ist, Gegenstände (74, 76, 78, 80) in Umfangsrichtung entlang eines Umfangs des Fertigungsturms (10) zu transportieren;
wobei
die Fördereinrichtung (26) eine Struktur (28) umfasst, die sich in Umfangsrichtung entlang des Umfangs des Fertigungsturms (10) erstreckt;
die Struktur (28) vertikal beweglich ist, um Gegenstände (74, 76, 78, 80) vertikal zwischen den Plattformen (12, 14, 16, 44) zu transportieren; und
der modulare Fertigungsturm (10) ferner einen ersten Roboter (36), der an der ersten Plattform (12) montiert ist, und/oder einen zweiten Roboter (32), der an der zweiten Plattform montiert ist, umfasst.

2. Modularer Fertigungsturm (10) nach Anspruch 1,
wobei die Fördereinrichtung (26) ferner einen Träger (30) umfasst, der relativ zu der Struktur (28) beweglich ist.

3. Modularer Fertigungsturm (10) nach Anspruch 2,
wobei der Träger (30) entlang einer geschlossenen Bahn um den Umfang des Fertigungsturms (10) beweglich ist.

4. Modularer Fertigungsturm (10) nach Anspruch 2 oder 3, wobei die Struktur (28) eine ringförmige Struktur (28) ist.

5. Modularer Fertigungsturm (10) nach Anspruch 4, wobei die Plattformen (12, 14, 16, 44) eine elliptische oder kreisförmige Gestalt aufweisen.

6. Modularer Fertigungsturm (10) nach einem der Ansprüche 1 bis 5, ferner umfassend eine dritte Plattform (16), wobei die dritte Plattform (16) oberhalb der zweiten Plattform (14) angeordnet ist.

7. Modularer Fertigungsturm (10) nach Anspruch 6, wobei der Fertigungsturm (10) eine erste, zumindest teilweise automatisierte Fertigungszelle zwischen der ersten Plattform (12) und der zweiten Plattform (14) sowie eine zweite, zumindest teilweise automatisierte Fertigungszelle zwischen der zweiten Plattform (14) und der dritten Plattform (16) umfasst.

8. Modularer Fertigungsturm (10) nach einem der Ansprüche 1 bis 7, ferner umfassend eine erste Säule (18), wobei die erste Säule (18) die erste Plattform (12) und die zweite Plattform (14) verbindet und die zweite Plattform (14) abstützt.

9. Modularer Fertigungsturm (10) nach Anspruch 8, ferner umfassend eine zweite Säule und eine dritte Säule (20, 22, 24), wobei die zweite Säule und die dritte Säule (20, 22, 24) die erste Plattform (12) und die zweite Plattform (14) verbinden und die zweite Plattform (14) stützen.

10. Modularer Fertigungsturm (10) nach Anspruch 8 oder 9, wobei die Struktur (28) an der ersten Säule (18) verschiebbar angebracht ist.

11. Modularer Fertigungsturm (10) nach einem der Ansprüche 1 bis 10, wobei die erste Säule (18) vertikal gestapelte Segmente von im Wesentlichen gleicher Länge umfasst.

12. Fertigungszelle (64), umfassend:
einen modularen Fertigungsturm (10) nach einem der Ansprüche 1 bis 11;
eine erste Arbeitsstation (66);
eine zweite Arbeitsstation (68); und
eine dritte Arbeitsstation (70);
wobei die Arbeitsstationen (66, 68, 70) um den Fertigungsturm (10) herum angeordnet sind.

13. Fertigungszelle (64) nach Anspruch 12, ferner umfassend:
einen Roboter (32), wobei der Roboter (32) im Inneren des Fertigungsturms (10) angeordnet und eingerichtet ist, erste Gegenstände (74) der ersten Arbeitsstation (66), zweite Gegenstände (76) der zweiten Arbeitsstation (68) und dritte Gegenstände (78) der dritten Arbeitsstation (70) zuzuleiten.

14. Fertigungszelle (64) nach Anspruch 13, wobei die erste Arbeitsstation (66) ein erstes Gestell (84) für eine Vielzahl von ersten Lagerbehältern (86) umfasst und wobei der Roboter (32) eingerichtet ist, die ersten Lagerbehälter (86), welche die ersten Gegenstände (74) enthalten, dem ersten Gestell (84) zuzuleiten oder die ersten Gegenstände (74) den ersten Lagerbehältern (86) im ersten Gestell (84) zuzuführen.

## Revendications

1. Tour de fabrication modulaire (10) comprenant :
une première plateforme (12) ;
une deuxième plateforme (14) ; et
un convoyeur (26) ;
dans laquelle la deuxième plateforme (14) est agencée au-dessus de la première plateforme (12) ; et
dans laquelle le convoyeur (26) est configuré pour transporter les articles (74, 76, 78, 80) verticalement entre les plateformes (12,14,16,44) ;
dans laquelle le convoyeur (26) est en outre configuré pour transporter les articles (74, 76, 78, 80) de manière circonférentielle le long d'un périmètre de la tour de fabrication (10) ;
dans laquelle
le convoyeur (26) comprend une structure (28) s'étendant circonférentiellement le long du périmètre de la tour de fabrication (10) ;
la structure (28) est mobile verticalement pour transporter les articles (74, 76, 78, 80) verticalement entre les plateformes (12, 14, 16, 44) ; et
la tour de fabrication modulaire (10) comprend en outre un premier robot (36) monté sur la première plateforme (12) et/ou un second robot (32) monté sur la deuxième plateforme.

2. Tour de fabrication modulaire (10) selon la revendication 1,
dans laquelle le convoyeur (26) comprend en outre un support (30) qui est mobile par rapport à la structure (28).

3. Tour de fabrication modulaire (10) selon la revendication 2,
dans laquelle le support (30) est mobile le long d'un chemin fermé autour du périmètre de la tour de fabrication (10).

4. Tour de fabrication modulaire (10) selon la revendication 2 ou 3, dans laquelle la structure (28) est une structure en forme d'anneau (28).

5. Tour de fabrication modulaire (10) selon la revendication 4, dans laquelle les plateformes (12,14, 16,44) présentent une forme elliptique ou circulaire.

6. Tour de fabrication modulaire (10) selon l'une quelconque des revendications 1 à 5, comprenant en outre une troisième plateforme (16), dans laquelle la troisième plateforme (16) est agencée au-dessus de la deuxième plateforme (14).

7. Tour de fabrication modulaire (10) selon la revendication 6, dans laquelle la tour de fabrication (10) comprend une première cellule de fabrication au moins partiellement automatisée entre la première plateforme (12) et la deuxième plateforme (14), et une seconde cellule de fabrication au moins partiellement automatisée entre la deuxième plateforme (14) et la troisième plateforme (16)

8. Tour de fabrication modulaire (10) selon l'une quelconque des revendications 1 à 7, comprenant en outre une première colonne (18), la première colonne (18) reliant la première plateforme (12) et la deuxième plateforme (14) et supportant la deuxième plateforme (14).

9. Tour de fabrication modulaire (10) selon la revendication 8, comprenant en outre une deuxième colonne et une troisième colonne (20, 22, 24), la deuxième colonne et la troisième colonne (20, 22, 24) reliant la première plateforme (12) et la deuxième plateforme (14) et supportant la deuxième plateforme (14).

10. Tour de fabrication modulaire (10) selon la revendication 8 ou 9, dans laquelle la structure (28) est fixée de manière coulissante à la première colonne (18).

11. Tour de fabrication modulaire (10) selon l'une quelconque des revendications 1 à 10, dans laquelle la première colonne (18) comprend des segments empilés verticalement de longueur sensiblement égale.

12. Cellule de fabrication (64) comprenant :
une tour de fabrication modulaire (10) selon l'une quelconque des revendications 1 à 11 ;
un premier poste de travail (66) ;
un deuxième poste de travail (68) ; et
un troisième poste de travail (70) ;
dans laquelle les postes de travail (66, 68, 70) sont agencés autour de la tour de fabrication (10).

13. Cellule de fabrication (64) selon la revendication 12, comprenant en outre :
un robot (32), dans laquelle le robot (32) est placé à l'intérieur de la tour de fabrication (10) et est configuré pour fournir les premiers articles (74) au premier poste de travail (66), les deuxièmes articles (76) au deuxième poste de travail (68) et les troisièmes articles (78) au troisième poste de travail (70).

14. Cellule de fabrication (64) selon la revendication 13, dans laquelle le premier poste de travail (66) comprend une première étagère (84) pour une pluralité de premiers bacs de stockage (86) et dans laquelle ledit robot (32) est configuré pour fournir les premiers bacs de stockage (86) contenant les premiers articles (74) à la première étagère (84) ou pour fournir les premiers articles (74) aux premiers bacs de stockage (86) dans la première étagère (84).
